(19) Europäisches Patentamt
European Patent Office
Office européen des brevets

(11) **EP 2 116 912 B1**

(12) **FASCICULE DE BREVET EUROPEEN**

(45) Date de publication et mention
de la délivrance du brevet:
**13.07.2011 Bulletin 2011/28**

(51) Int Cl.:
***G05B 17/02*** *(2006.01)*    ***G05D 3/20*** *(2006.01)*

(21) Numéro de dépôt: **09305401.3**

(22) Date de dépôt: **05.05.2009**

(54) **Procédé et dispositif de rejet robuste de perturbations périodiques dans une boucle de contrôle de position d'un axe**

Verfahren und Vorrichtung zur robusten Unterdrückung von periodischen Störungen in einem Regelkreis zur Positionierung einer Achse

Method and device for robust periodic disturbances rejection in an axis position control loop

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **07.05.2008 FR 0853025**

(43) Date de publication de la demande:
**11.11.2009 Bulletin 2009/46**

(73) Titulaire: **Ixmotion**
**78160 Marly le Roi (FR)**

(72) Inventeur: **Vau, Bernard**
**94100 Saint Maur des Fosses (FR)**

(74) Mandataire: **Michelet, Alain et al**
**Cabinet HARLE et PHELIP**
**14-16, rue Ballu**
**75009 Paris (FR)**

(56) Documents cités:
**FR-A- 2 887 044**

- **GAN W-C ET AL: "Torque and Velocity Ripple Elimination of AC Permanent Magnet Motor Control Systems Using the Internal Model Principle" IEEE / ASME TRANSACTIONS ON MECHATRONICS, IEEE SERVICE CENTER, PISCATAWAY, NJ, US, vol. 9, no. 2, 1 juin 2004 (2004-06-01), pages 436-447, XP011113981 ISSN: 1083-4435**
- **CHAMPENOIS G ET AL: "Implementation of RST controllers for a flexible servo considering practical limitations" INDUSTRIAL AUTOMATION AND CONTROL, 1995 (I A & C'95)., IEEE/IAS INTERN ATIONAL CONFERENCE ON (CAT. NO.95TH8005) HYDERABAD, INDIA 5-7 JAN. 1995, NEW YORK, NY, USA,IEEE, US, 5 janvier 1995 (1995-01-05), pages 209-213, XP010146893 ISBN: 978-0-7803-2081-9**

**Description**

La présente invention concerne un procédé ainsi qu'un dispositif de rejet robuste de perturbations périodiques dans une boucle de contrôle de position d'un axe. Elle a des applications dans le domaine des automatismes dans lesquels des moteurs électriques commandés sont mis en oeuvre et en particulier au sein de boucles de rétrocontrôle ou d'asservissement. Elle s'applique en particulier dans les simulateurs de mouvements.

Dans le domaine du contrôle d'axes, les moteurs en courant alternatif sans balai (« AC brushless ») sont aujourd'hui très largement utilisés. Il s'agit en fait de moteurs synchrones auxquels on adjoint une électronique assurant un autopilotage du moteur. Cet autopilotage a pour effet de rendre le couple développé par le moteur proportionnel à une grandeur d'entrée de commande de l'électronique.

Cette linéarité entre le couple et la commande est une propriété très appréciable car elle permet l'utilisation d'algorithmes linéaires pour le contrôle de la vitesse ou de la position de l'axe du moteur. De plus, l'utilisation d'un moteur sans balais garantit un entretien minimal de la machine.

Le mouvement de l'axe asservi peut être soumis à des perturbations périodiques dépendantes de la position dudit axe. Ces perturbations peuvent notamment provenir des ondulations de couple du moteur autopiloté qui ne sont jamais totalement réductibles, malgré les efforts des constructeurs. L'origine des ondulations de couple est multiple. Celles-ci peuvent provenir du couple de « cogging » qui est du à l'interaction entre les aimants permanents et les dents du stator, mais aussi provenir du couple de réluctance, du couple mutuel, ou encore des décalages (« offsets ») en courant continu des capteurs de courant dans l'électronique de commande. En pratique, l'origine prépondérante dépend du type de moteur et du constructeur. Quoi qu'il en soit, l'ondulation de couple est un phénomène périodique en fonction de la position angulaire de l'axe et sa fréquence est proportionnelle à la vitesse angulaire dudit axe.

Une autre source de perturbation périodique sur un axe se trouve au niveau du capteur mesurant la position dudit axe. Dans le cas où l'on utilise un codeur incrémental, des méthodes à base de réseaux optiques permettent de connaître la position de l'axe entre deux traits du codeur. Cette méthode dite d'interpolation de la position n'est pas parfaite et induit une non linéarité sur la mesure de la position angulaire quasiment reproductible d'un trait de codeur à l'autre. Dans ce cas aussi, la non linéarité induite par ce phénomène est périodique et proportionnelle à la vitesse angulaire de l'axe.

Dans une boucle d'asservissement classique, où la variable contrôlée est soit la position, soit la vitesse angulaire de l'axe, ces perturbations périodiques entraînent des ondulations sur la vitesse angulaire de l'axe qui peuvent se révéler gênantes sur certaines applications. C'est le cas notamment des simulateurs mécaniques de mouvements qui sont des systèmes destinés en général au test de centrales inertielles et où la stabilité de vitesse est un élément déterminant de la qualité du système.

Afin de limiter l'effet de ces perturbations périodiques, il a été proposé plusieurs méthodes permettant leur atténuation. Elles peuvent être subdivisées en trois principales catégories :

Dans la première catégorie, c'est la conception de la machine qui est optimisée. Par exemple en ce qui concerne le moteur on élimine par construction notamment le couple de « cogging » et le couple réluctant. Ce travail ne peut être fait que par le constructeur du moteur.

Dans la seconde catégorie, des méthodes de commande adaptative sont utilisées. Dans ces commandes adaptatives, l'amplitude et la phase des ondulations sont estimées au moyen d'un algorithme approprié, et elles sont utilisées dans un contrôleur de moteur pour compenser les perturbations. Il est à noter que ces méthodes ne sont efficaces que si les amplitudes des ondulations sont constantes sur un tour, ce qui n'est pas forcément le cas. Dans le cas contraire, on aboutit seulement à une compensation partielle.

Dans la troisième catégorie, on range les algorithmes d'asservissement de l'axe en vitesse ou en position angulaire qui incluent un rejet de perturbation sinusoïdale à la fréquence des ondulations. Comme ladite fréquence est variable en fonction de la vitesse angulaire, le correcteur utilise forcément des gains séquencés en fonction de cette vitesse angulaire. Néanmoins, dans ce cas, le rejet des ondulations se fait de façon robuste, c'est-à-dire qu'il n'y a pas besoin de connaître la phase et l'amplitude des perturbations sur le couple afin de les éliminer. Ainsi, la/les fréquences de perturbation étant proportionnelles à la vitesse de l'axe, pour estimer cette/ces fréquences, on peut se baser sur la vitesse de consigne. Le rapport de proportionnalité entre la fréquence et la vitesse est constant et dépend de la construction du moteur.

La présente invention se range dans cette troisième catégorie et permet notamment le rejet des perturbations périodiques dont la fréquence dépend de la vitesse de rotation d'un axe moteur asservi.

Appartenant à cette troisième catégorie on peut signaler le document antérieur publié dans la revue « IEEE/ASME Transactions on mechatronics, vol.9 n°2, june 2004, sous le titre « torque and velocity ripple elimination of AC permanent magnet motor control systems using the internal model principle » et dont les auteurs sont Wai-Chuen et Li Qiu.

Ces auteurs proposent une méthode de contrôle de la vitesse d'un axe basée sur un correcteur à deux degrés de liberté de type RST, dont les blocs RST sont adaptés en fonction de ladite vitesse, de façon à rejeter les perturbations statiques et les perturbations sinusoïdales, à fréquence variable, des perturbations périodiques.

Toutefois, ce document ne peut directement conduire à une application industrielle pour diverses raisons :

- Les auteurs ne présentent pas une méthodologie de réglage du correcteur permettant d'assurer qu'à toutes les vitesses angulaires, le correcteur garantit un niveau de marges statiques et dynamiques nécessaires pour assurer la robustesse de la boucle.
- Le montage des auteurs s'applique à une boucle de vitesse. Si l'on transpose le problème à une boucle de position, en ayant toujours en tête le contrôle de la vitesse, l'ordre du correcteur augmente. Or tous les paramètres des blocs RST devant être calculés en ligne, le volume de calculs à effectuer à chaque période d'échantillonnage risque de devenir rapidement rédhibitoire surtout si la période d'échantillonnage du dispositif est petite, comme l'on en trouve souvent dans le domaine du contrôle d'axes.
- Le rejet des perturbations est systématique c'est-à-dire qu'il n'est pas laissé le choix d'activer ou non le rejet de la perturbation sinusoïdale.

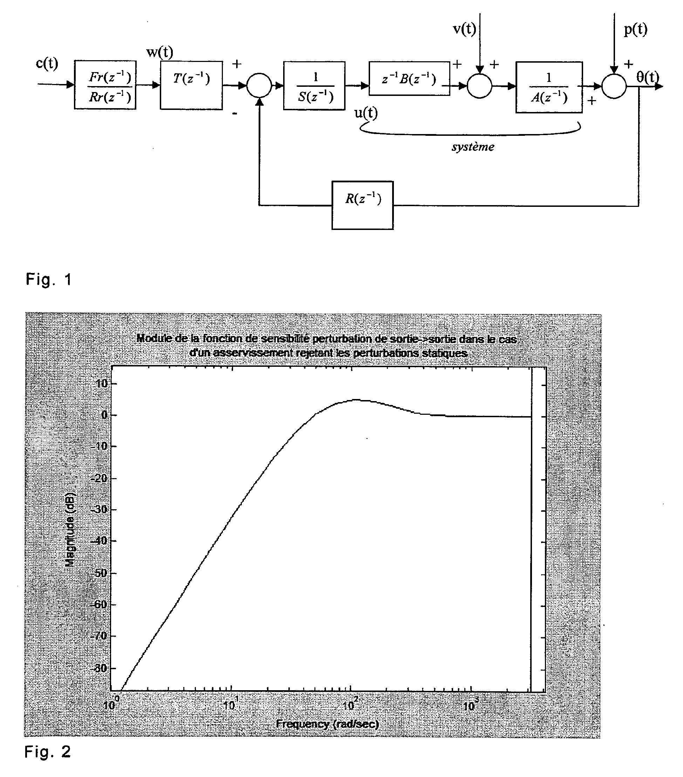

Afin de mieux faire comprendre l'invention, une description d'un dispositif correcteur à deux degrés de liberté de type RST classique avec filtre de consigne (préfiltre) est maintenant effectuée ainsi qu'une présentation de principes généraux en relation avec les problèmes et solutions en rapport avec l'état de la technique et l'invention. Le dispositif correspondant de correcteur RST avec filtre de consigne est symbolisé sur la Figure 1 où l'on a les paramètres suivants :

c(t): consigne en position,
w(t): sortie du filtre de consigne,
$\theta(t)$ : position mesurée de l'axe,
u(t) : commande en entrée du système,
v(t) : perturbation de charge,
p(t) : perturbation sur la sortie.

Dans le cadre général des correcteurs RST, on peut signaler le brevet N° 2911699 intitulé « Optimisation de la réponse fréquentielle d'un simulateur de mouvement par suivi adaptatif de consignes sinusoïdales » dans laquelle un filtre de consigne est mis en oeuvre dans une structure RST.

Sur la Figure 1, la fonction de transfert $Rr(z^{-1})/Fr(z^{-1})$ constitue le filtre de consigne destiné, comme son nom l'indique, à filtrer la consigne, dans le cas où celle-ci serait par exemple trop abrupte pour le correcteur.

Soit un axe à commander relié à un moteur synchrone autopiloté et à un codeur de position mesurant la position dudit axe. Compte tenu de l'autopilotage, la commande u(t) en entrée de l'électronique de commande est proportionnelle au couple développé par le moteur. La position de l'axe du moteur est notée $\theta(t)$.

On considère que l'ensemble des frottements secs et visqueux sont des perturbations agissant sur le couple.

Dans ces conditions, en appliquant le principe fondamental de la dynamique, la fonction de transfert entre la commande u(t) et la position $\theta(t)$ s'écrit simplement :

$$\frac{\theta(t)}{u(t)} = \frac{b}{s^2}$$

avec b proportionnel à 1/J et J l'inertie du système.

Le système est échantillonné à la période *Te*. Soit z l'opérateur avance d'une période d'échantillonnage. La fonction de transfert du système discrétisé muni d'un bloqueur d'ordre 0 s'écrit :

$$\frac{\theta(t)}{u(t)} = \frac{0.5 \cdot b \cdot Te^2 \cdot z^{-1} + 0.5 \cdot b \cdot Te^2 \cdot z^{-2}}{1 - 2z^{-1} + z^{-2}}$$

La fonction de transfert entre w(t) et $\theta(t)$ s'écrit :

$$\frac{\theta(t)}{w(t)} = \frac{z^{-1}T(z^{-1})B(z^{-1})}{A(z^{-1})S(z^{-1}) + z^{-1}B(z^{-1})R(z^{-1})}$$

En présence de perturbations sur la sortie et des perturbations de charge, on définit les fonctions de sensibilité suivantes du système :

$S_{\theta p}$ : Fonction de transfert entre la perturbation sur la sortie p(t) et la sortie $\theta$(t)
$S_{\theta v}$ : Fonction de transfert entre la perturbation de charge v(t) et la sortie $\theta_{(t)}$.

De la Figure 1, on déduit les relations suivantes :

$$S_{\theta p} = \frac{\theta(t)}{p(t)} = \frac{A(z^{-1})S(z^{-1})}{A(z^{-1})S(z^{-1}) + z^{-1}B(z^{-1})R(z^{-1})}$$

$$S_{\theta v} = \frac{\theta(t)}{v(t)} = \frac{S(z^{-1})}{A(z^{-1})S(z^{-1}) + z^{-1}B(z^{-1})R(z^{-1})}$$

Soit $\omega$(t) la vitesse angulaire de l'axe, c'est-à-dire la dérivée de la position angulaire $\theta$(t), on a la relation :

$$\omega(t) = \frac{1 - z^{-1}}{Te} \cdot \theta(t)$$

On peut ainsi définir une fonction de transfert supplémentaire entre la perturbation de charge v(t) et la vitesse angulaire de l'axe $\omega$(t), nommée $S_{\omega v}$.
On peut écrire :

$$S_{\omega v} = \frac{\omega(t)}{v(t)} = \frac{S(z^{-1}) \cdot (1 - z^{-1})/Te}{A(z^{-1})S(z^{-1}) + z^{-1}B(z^{-1})R(z^{-1})}$$

Par ailleurs, on peut montrer que la fonction de transfert entre la perturbation de charge v(t) et les variations relatives de vitesse angulaire $\frac{\Delta\omega(t)}{\omega(t)}$ de l'axe est égale à $S_{\theta v}$,

Le réglage du correcteur se fait classiquement par la spécification d'un polynôme de stabilité arbitraire $D(z^{-1})$ puis on calcule $S(z^{-1})$ et $R(z^{-1})$ tels que l'on ait :

$$A(z^{-1})S(z^{-1}) + z^{-1}B(z^{-1})R(z^{-1}) = D(z^{-1})$$

Cette dernière équation étant une équation polynomiale dite équation de Bézout dont la résolution passe par la résolution d'un système linéaire dit système de Sylvester.
On peut noter que le degré de $D(z^{-1})$ est forcément au moins égal à 2n, où n est le degré de $A(z^{-1})$.
Afin d'assurer le rejet robuste des perturbations sur la commande ou sur la sortie, il est nécessaire, dans l'équation de Bézout de pré-spécifier le bloc S. C'est-à-dire qu'il faut que le bloc S puisse s'écrire sous la forme :

$$S(z^{-1}) = Hs(z^{-1}) \cdot S'(z^{-1})$$

On appelle cette méthode de pré-spécification, la méthode du « modèle interne ».

L'équation de Bézout devient alors :

$$A(z^{-1})Hs(z^{-1})S'(z^{-1}) + z^{-1}B(z^{-1})R(z^{-1}) = D(z^{-1})$$

Les inconnues en sont maintenant S'$(z^{-1})$ et R$(z^{-1})$.

Si l'on souhaite rejeter d'une façon robuste les perturbations statiques il faut prendre :

$$Hs(z^{-1}) = 1 - z^{-1}$$

Si l'on souhaite rejeter une perturbation sinusoïdale à la fréquence f, il faut prendre

$$Hs(z^{-1}) = 1 - 2\cos(2\pi \cdot f \cdot Te) \cdot z^{-1} + z^{-2}$$

Si l'on souhaite rejeter une perturbation statique et une perturbation sinusoïdale, il faut que Hs s'écrive :

$$Hs(z^{-1}) = (1 - z^{-1}) \cdot (1 - 2\cos(2\pi \cdot f \cdot Te) \cdot z^{-1} + z^{-2})$$

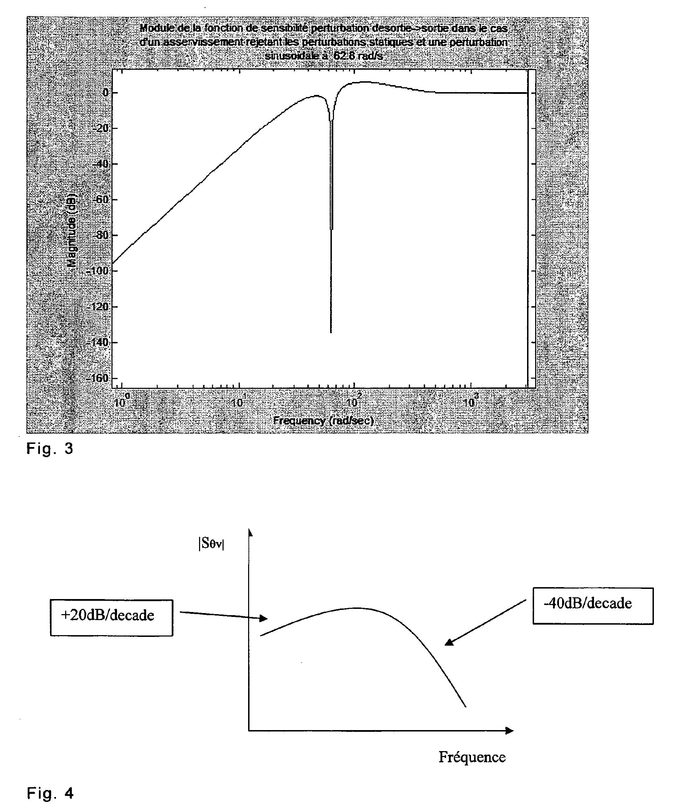

On voit donc que l'on peut rejeter ainsi des perturbations de nature diverses. En particulier ce rejet se traduit sur la courbe du module de la fonction de sensibilité $S_{\theta p}$ (d'une perturbation sur la sortie vers la sortie) par un module égal à zéro à la fréquence spécifiée du rejet comme on peut le voir sur les Figures 2 et 3.

En particulier, on peut montrer que si l'on considère que le système est un double intégrateur et que $H_s$ contient un zéro en +1, alors, le module de la fonction de sensibilité $S_{\theta p}$ présente une pente de +60dB/décade dans les basses fréquence et une pente de 0dB/décade en haute fréquence. Sous ces mêmes conditions, les pentes du module de $S_{\theta v}$ sont de +20 dB/décade en basse fréquence et -40 dB/décade en haute fréquence.

L'allure du module de $S_{\theta v}$ en fonction de la fréquence qui en est déduite est représentée Figure 4. La fonction correspondante admet un maximum et on voit qu'il existe une zone fréquentielle critique où les perturbations de charge sont particulièrement amplifiées.

On pourrait penser à première vue que l'on peut ainsi rejeter les perturbations à toutes les fréquences que l'on désire. Mais il n'en malheureusement rien, à cause d'un théorème fondamental de l'automatique qui est le théorème de Bode-Freudenberg-Looze. Ce théorème de Bode-Freudenberg-Looze s'écrit :

$$\int_0^\infty \ln\left(\left|S_{\theta p}(j.2\pi \cdot f)\right|\right) \cdot df = 0$$

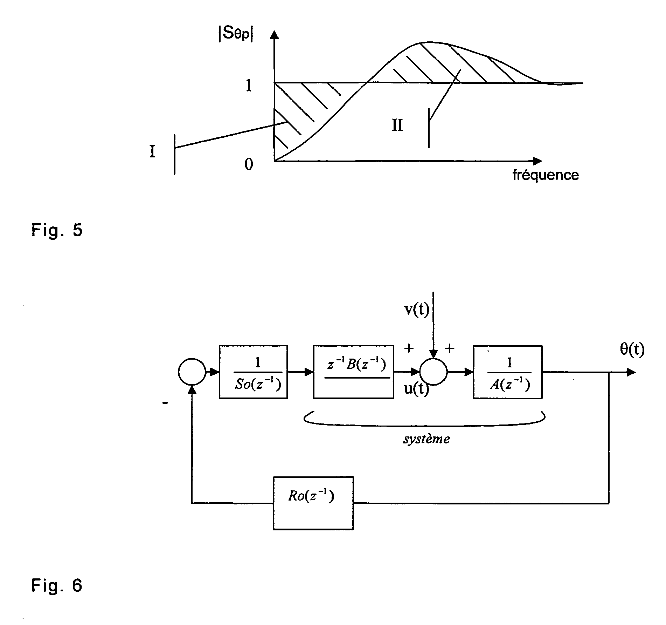

Ce théorème est valable pour les systèmes dont le degré relatif (différence entre le degré du numérateur et du dénominateur de la fonction de transfert) est au moins égal à 2. Il conduit à ce que sur la fonction du module de la sensibilité $S_{\theta p}$, qui est représentée schématiquement sur la Figure 5, les aires I est II sont forcément égales.

En conséquence, toute « encoche » pour rejection créée dans la fonction de sensibilité $S_{\theta p}$ entraîne nécessairement une augmentation du module de cette fonction à une autre fréquence. On ne peut donc pas multiplier le rejet de perturbations sinusoïdales indéfiniment.

La méthode de contrôle exposée dans l'article de Wai-Chuen et al. consiste à supposer que les perturbations périodiques sont strictement sinusoïdales. De plus la connaissance de la vitesse angulaire ω de l'axe permet d'inférer la fréquence f de ces perturbations.

A partir de là, Wai-Chuen et al. proposent de calculer en ligne les coefficients des blocs RST du correcteur suivant le principe du modèle interne par résolution à chaque période d'échantillonnage de l'équation de Bézout décrite précédemment :

$$A(z^{-1}) \cdot Hs(z^{-1}) + z^{-1}B(z^{-1})R(z^{-1}) = D(z^{-1})$$

Avec :

$$Hs(z^{-1}) = (1 - z^{-1}).(1 - 2\cos(2\pi \cdot f \cdot Te)z^{-1} + z^{-2})$$

Dans cette équation de Bézout, $A(z^{-1})$, $B(z^{-1})$ sont fixes (paramètres de la fonction de transfert du système à commander). Seul le polynôme $Hs(z^{-1})$ est variable dans le temps, en fonction de la fréquence de perturbation sinusoïdale. Enfin, $D(z^{-1})$, polynôme des pôles de la boucle fermée, est également choisi fixe. Le polynôme $R(z^{-1})$ est ainsi calculé en ligne.

On peut remarquer que les auteurs précités réalisent le contrôle en vitesse de l'axe. C'est-à-dire que dans le cas qui les concerne, le système à commander est d'ordre 1, il en résulte que le degré du polynôme $R(z^{-1})$ à calculer en ligne est relativement simple puisqu'il est d'ordre 3. Par ailleurs, le nombre de pôles placés au moyen du polynôme $D(z^{-1})$ est de 4.

Or, dans le cas où l'on cherche à faire un asservissement de position, le système à commander est d'ordre 2. Il en résulte que les degrés de $R(z^{-1})$, $S(z^{-1})$, $T(z^{-1})$ sont alors plus élevés, si bien que le volume de calculs requis pour la résolution de Bézout augmente sensiblement, ce qui peut poser des problèmes au niveau du calculateur si la période d'échantillonnage est courte.

Par ailleurs, le choix de Wai-Chuen et al. de maintenir fixe le polynôme $D(z^{-1})$ quelque soit la fréquence de perturbation à rejeter est limitant, dans la mesure où l'on optimise pas la robustesse de la boucle en fonction de cette fréquence de perturbation. Or, il est important dans un contexte industriel de garantir qu'un niveau minimal de marge de retard et de marge de module de la boucle fermée soit assuré quelque soit ladite fréquence de perturbation. En particulier, il est souhaitable, dans le cas où le rejet d'une perturbation entraînerait inévitablement des marges inférieures à celles spécifiées, que ce rejet ne soit pas réalisé. Cette dernière possibilité conduit à ce que le rejet d'une perturbation sinusoïdale puisse éventuellement ne pas avoir lieu à certaines fréquences, si la nature de ladite fréquence entraîne inévitablement une dégradation inadmissible des marges de robustesse.

Il se pose ainsi également un problème de conservation d'une marge de retard admissible et on va maintenant présenter des principes généraux en relation avec la robustesse d'un système bouclé.

Afin de mesurer la robustesse d'un système bouclé, on a recours à la notion de marges. Les marges usuelles utilisées sur les systèmes monovariables sont :

- la marge de module, et
- la marge de retard.

La marge de module est la distance du lieu fréquentiel de la boucle ouverte par rapport au point -1, dans le plan de Nyquist. C'est un indicateur global de la robustesse d'une loi de commande linéaire. En général, on spécifie une marge de module supérieure à 0,5.

La marge de retard représente la valeur maximale du retard parasite que l'on pourrait introduire dans la boucle avant que celle-ci ne devienne instable. A la différence de la marge de module, il n'y a pas de spécification générale sur la marge de retard. Son choix relève d'un compromis entre la robustesse et les performances attendues en matière de rejet de perturbation.

On montre, en appelant MM la marge de module que :

$$MM = \frac{1}{\left| S_{\theta p} \right|_{\infty}}$$

C'est-à-dire que la marge de module est égale à l'inverse du maximum du module de la fonction de sensibilité

$S_{\theta p}$.

Aussi, lorsque à partir d'un système central bouclé RST d'un type classique rejetant les perturbations statiques, on cherche de surcroît à éliminer une perturbation sinusoïdale (tout en gardant globalement les mêmes performances de rejet statique), « l'encoche » pour réjection créée à la fréquence correspondante va entraîner une remontée du module de $S_{\theta p}$ aux autres fréquences et en particulier à celles dont le module est supérieure à 1 (cf. théorème de Bode-Freudenberg-Looze). En conséquence, on peut penser que dans le cas général, la marge de module va être diminuée par l'adjonction de ce rejet de perturbation sinusoïdale (toutes choses étant égales par ailleurs). On constate donc déjà que l'ajout d'un rejet de perturbation sinusoïdale sur un système bouclé rejetant initialement les perturbations statiques, n'est pas sans effet sur la robustesse de la boucle.

Les conséquences sont également importantes sur la marge de retard du système bouclé. Dans le cas où l'on suppose que le rejet d'une perturbation sinusoïdale s'effectue en totalité à la fréquence fo, on peut montrer que la marge de retard du système bouclé est contrainte par ce rejet.

En particulier, si on nomme MR la marge de retard d'un système bouclé, on montre que le rejet parfait d'une perturbation sinusoïdale à une fréquence fo (en hertz) entraîne l'inégalité :

$$MR < \frac{1}{4 \cdot fo}$$

On en déduit ainsi une conséquence très importante : Afin de garantir une marge de retard MRc à un système bouclé, le rejet des perturbations sinusoïdales ne peut avoir lieu à toutes les fréquences. Ce rejet de perturbation n'est possible que pour des fréquences f telles que :

$$f < \frac{1}{4 \cdot MRc}$$

Puisque le rejet de perturbation sinusoïdale parfait n'est pas possible à toute fréquence, d'une part, et compte tenu de l'allure du module de $S_{\theta v}$ d'autre part, on a tout intérêt à moduler la profondeur du rejet de perturbation en fonction de la fréquence. Or, on a vu précédemment que le module de $S_{\theta v}$ dans le cas du rejet des perturbations statiques a une allure qui est schématisée sur la Figure 4.

Il est donc souhaitable de disposer d'une stratégie de contrôle différente de ce qui est connu, également basée sur une structure de correcteur fixe de type RST, mais qui évite notamment les problèmes mentionnés et permette une exploitation effective.

De plus, dans le cadre d'une loi de commande à paramètres variant, il est nécessaire de pouvoir désactiver les moyens de rejet (par exemple par un interrupteur en sortie d'un bloc modificateur ou par forçage à une valeur nulle de la sortie d'un tel bloc avec ou non arrêt des calculs pour ledit bloc), en particulier dans le cas où la fréquence des perturbations est trop importante par rapport à un critère tel que celui mentionné précédemment.

La présente invention y parvient en ajoutant à une structure de correcteur fixe de type RST, un bloc d'estimation de la perturbation de charge du système, ainsi qu'un bloc de transfert additif dont les paramètres sont calculés en ligne et varient en fonction de la vitesse de l'axe. La sortie du bloc de transfert additif est injectée en point particulier du correcteur RST fixe. Il en résulte qu'il est également possible de décider ou non de l'injection de cette sortie du bloc de transfert additif, c'est-à-dire de rejeter ou non les perturbations sinusoïdales. Ce bloc de transfert additif a pour effet de créer une ou plusieurs atténuations dans la fonction de sensibilité du système entre une perturbation de charge et la sortie du système, aux fréquences des perturbations périodiques, tout en modifiant le moins possible ladite fonction de sensibilité aux autres fréquences. Dans le cadre de l'invention, il est également proposé une méthode de réglage hors ligne des paramètres R S et T associée à une méthode de calcul des paramètres du bloc additif de façon à assurer qu'à toute fréquence de perturbation, un niveau de marge de retard et un niveau de marge de module prédéfinis soient garantis, de façon à assurer la robustesse du système. Dans des variantes, il est possible de mettre en oeuvre en amont du dispositif RST avec blocs d'estimation et de transfert, un préfiltre de consigne.

L'invention concerne donc un procédé de rejet robuste des perturbations périodiques dans une structure de commande de moteur en position, les perturbations périodiques étant assimilées à au moins une oscillation sinusoïdale à une fréquence déterminable proportionnelle à la vitesse de l'axe, la structure de commande recevant un signal de consigne en position c(t) mettant en oeuvre une boucle de contrôle de position de l'axe dudit moteur, ladite structure de commande étant du type correcteur RST et étant échantillonnée afin de permettre des calculs numériques dans un calculateur programmable pour produire des résultats destinés à la commande du moteur, le correcteur RST mettant en oeuvre des moyens de calcul correspondant, d'une part, à une fonction $1/So(z^{-1})$ en amont du moteur et produisant un signal de commande u(t) et, d'autre part, une fonction $Ro(z^{-1})$ dans sa boucle qui reçoit en entrée un signal de position θ(t) d'un capteur de position sur l'axe dudit moteur, l'ensemble regroupant le moteur, le capteur de position, les moyens de calculs des fonctions $1/So(z^{-1})$ et $Ro(z^{-1})$ avec bouclage étant appelé correcteur central.

Selon l'invention :

- on ajoute au correcteur central deux moyens de calcul supplémentaires, le premier étant un bloc estimateur $E(z^{-1})$ et le second un bloc modificateur $Q(z^{-1})$, ainsi qu'une boucle supplémentaire,
- on modélise le moteur sous forme d'un système modélisé soumis à une perturbation de charge v(t), ledit système modélisé recevant en entrée le signal de commande u(t) et produisant en sortie le signal de position θ(t), le modèle du système appliquant sur le signal de commande u(t) une fonction $z^{-1}B(z^{-1})$ pour produire un signal additionné à la perturbation de charge v(t), la résultante étant soumise à une fonction $1/A(z^{-1})$ pour produire le signal de position θ(t),
- on calcule un signal d'estimation de la perturbation de charge $\hat{v}(t)$ dans le bloc estimateur $E(z^{-1})$ recevant en première entrée le signal de commande u(t) et en seconde entrée le signal de position θ(t), dans ledit bloc estimateur le signal de commande u(t) étant soumis à la fonction $z^{-1}B(z^{-1})$ pour produire un signal qui est soustrait au résultat de l'application de la fonction $A(z^{-1})$ sur le signal de position θ(t), la soustraction donnant le signal d'estimation de la perturbation de charge $\hat{v}(t)$,
- on applique le signal d'estimation de la perturbation de charge $\hat{v}(t)$ au bloc modificateur $Q(z^{-1})$ pour produire un signal modificateur appliqué à une entrée négative (il en résulte que le signal modificateur est soustrait de l'autre signal arrivant sur l'additionneur) d'un additionneur supplémentaire disposé en amont du moyen de calcul de la fonction $1/So(z^{-1})$ et formant ainsi la boucle supplémentaire, le bloc modificateur ayant une fonction de transfert variable en fonction de la au moins une fréquence déterminable et qui est calculée en temps réel ou quasi-réel sous la contrainte que la fonction de sensibilité de position $S_{θp}$ de la structure de commande comporte un creux pour la au moins une fréquence déterminable.

Dans divers modes de mise en oeuvre de l'invention, les moyens suivants pouvant être utilisés seuls ou selon toutes les combinaisons techniquement possibles, sont employés :

- la boucle supplémentaire est intérieure à la boucle en $Ro(z^{-1})$ du correcteur central, l'additionneur supplémentaire étant disposé juste en amont du moyen de calcul de la fonction $1/So(z^{-1})$,
- le correcteur central est calculé (synthétisé) préalablement, hors ligne, pour rejeter des perturbations statiques et les fonctions So et Ro sont mémorisées pour être directement utilisées ultérieurement lors des calculs en temps réel,
- lors du calcul du correcteur central dans lequel on met en oeuvre une étape de détermination d'un horizon de filtrage To et d'un horizon de commande Tc tels que Tc < To avec, de préférence, To/5<Tc<To/2, ladite étape de détermination de l'horizon de filtrage To et de l'horizon de commande Tc est effectuée sous la contrainte que quelle/quelles que soit/soient la/les fréquences à rejeter (les fréquences que l'on sera amené à rencontrer en pratique), la marge de retard soit supérieure à une marge de retard seuil prédéterminée mrc et la marge de module soit supérieure à une marge de module seuil prédéterminée mmc,
- dans l'étape de détermination de l'horizon de filtrage To et de l'horizon de commande Tc sous contrainte, on calcule un ensemble de minima des marges de retard et des marges de module, les minima étant fonction des valeurs possibles de la/des fréquences à rejeter et étant également obtenus en faisant varier les valeurs de To et Tc et à partir de ensemble de minima des marges de retard et des marges de module on remonte aux valeurs To et Tc qui assurent le respect de la contrainte que la marge de retard soit supérieure à une marge de retard seuil prédéterminée mrc et la marge de module soit supérieure à une marge de module seuil prédéterminée mmc et, en plus, de préférence, que To/5<Tc<To/2,
- on calcule (en ligne) la fonction de transfert $Q(z^{-1})$ du bloc modificateur en considérant le rapport de polynômes

$$Q(z^{-1}) = \frac{\beta(z^{-1})}{\alpha(z^{-1})}$$

à paramètres variables et on assimile par équivalence la structure de commande globale à un correcteur RST en R et S de blocs de fonctions polynomiales

$$R(z^{-1}) = \alpha(z^{-1}) \cdot Ro(z^{-1}) + A(z^{-1}) \cdot \beta(z^{-1})$$

$$S(z^{-1}) = \alpha(z^{-1}).So(z^{-1}) - z^{-1} \cdot B(z^{-1}) \cdot \beta(z^{-1})$$

on factorise la fonction polynomiale $S(z^{-1})$ telle que pré-spécifiée en $S(z^{-1})=Hs(Z^{-1}).S'(Z^{-1})$ pour faire apparaître un terme en $(1-z^{-1})$ correspondant au rejet de perturbations statiques et des termes $S'(z^{-1})$ et $Hs1(z^{-1})$, $S(Z^{-1})$ s'exprimant

$$S(z^{-1}) = (1-z^{-1}).Hs1(z^{-1}).S'(z^{-1})$$

et on détermine les polynômes Hs1 et $\alpha$ par discrétisation d'une fonction de transfert continue dépendant du niveau de rejet Mt souhaité à la fréquence considérée,
le polynôme $\beta$ étant ensuite obtenu par la résolution de l'équation de Bézout suivante

$$S'(z^{-1}) \cdot Hs(z^{-1}) + z^{-1} B(z^{-1}) \cdot \beta(z^{-1}) = So(z^{-1}) \cdot \alpha(z^{-1})$$

- la fonction de transfert continue dépendant du niveau de rejet souhaité à la fréquence considérée dans le cas d'une seule fréquence f1 est :

$$F(s) = \frac{s^2 + 2\xi_{num} \cdot 2\pi \cdot f_1 \cdot s + (2\pi \cdot f_1)^2}{s^2 + 2\xi_{den} \cdot 2\pi \cdot f_1 \cdot s + (2\pi \cdot f_1)^2}$$

- la fonction de transfert continue dépendant du niveau de rejet souhaité à la fréquence considérée dans le cas de deux fréquences f1 et f2 est :

$$F(s) = \frac{s^2 + 2\xi_{num1} \cdot 2\pi \cdot f_1 \cdot s + (2\pi \cdot f_1)^2}{s^2 + 2\xi_{den1} \cdot 2\pi \cdot f_1 \cdot s + (2\pi \cdot f_1)^2} \cdot \frac{s^2 + 2\xi_{num2} \cdot 2\pi \cdot f_2 \cdot s + (2\pi \cdot f_2)^2}{s^2 + 2\xi_{den2} \cdot 2\pi \cdot f_2 \cdot s + (2\pi \cdot f_2)^2}$$

- le niveau de rejet Mt pour une fréquence $f_i$ donnée est calculé par $Mt_i=20.\log(\xi num_i/\xi den_i)$ et, de préférence on prend $\xi den_i=0,1$.

L'invention concerne également un dispositif pour rejet robuste des perturbations périodiques dans une structure de commande de moteur en position, les perturbations périodiques étant assimilées à au moins une oscillation sinusoïdale à une fréquence proportionnelle à la vitesse angulaire de l'axe, la structure de commande recevant un signal de consigne en position c(t) mettant en oeuvre une boucle de contrôle de position de l'axe dudit moteur, ladite structure de commande étant du type correcteur RST et étant échantillonnée afin de permettre des calculs numériques dans un calculateur programmable pour produire des résultats destinés à la commande du moteur, le correcteur RST mettant en oeuvre des moyens de calcul correspondant, d'une part, à une fonction $1/So(z^{-1})$ en amont du moteur et produisant un signal de commande u(t) et, d'autre part, une fonction $Ro(z^{-1})$ dans sa boucle qui reçoit en entrée un signal de position $\theta(t)$ d'un capteur de position sur l'axe dudit moteur, l'ensemble regroupant le moteur, le capteur de position, les moyens de calculs des fonctions $1/So(z^{-1})$ et $Ro(z^{-1})$ avec bouclage étant appelé correcteur central.
Ledit dispositif de l'invention formant structure de commande de moteur en position comporte, par ajout au correcteur central, des moyens pour l'exécution du procédé de l'une quelconque des revendications précédentes, lesdits moyens étant deux moyens de calcul supplémentaires, le premier étant un bloc estimateur $E(z^{-1})$ et le second un bloc modificateur $Q(z^{-1})$, ainsi qu'une boucle supplémentaire, le bloc estimateur $E(z^{-1})$ permettant le calcul d'un signal d'estimation de la perturbation de charge $\hat{v}(t)$, ledit bloc estimateur recevant en première entrée le signal de commande u(t) et en seconde entrée le signal de position θ(t), le bloc modificateur $Q(z^{-1})$ recevant en entrée le signal d'estimation de la perturbation de charge $\hat{v}(t)$ pour produire un signal modificateur appliqué à une entrée négative (il en résulte que le signal modificateur est soustrait de l'autre signal arrivant sur l'additionneur) d'un additionneur supplémentaire disposé en amont du moyen de calcul de la fonction $1/So(z^{-1})$ et formant ainsi la boucle supplémentaire, le bloc modificateur ayant une fonction de transfert variable en fonction de la au moins une fréquence déterminable et qui est calculée en temps réel ou quasi-réel sous la contrainte que la fonction de sensibilité de position $S_{\theta p}$ de la structure de commande comporte un creux pour la au moins une fréquence déterminable.

La présente invention, sans qu'elle en soit pour autant limitée, va maintenant être exemplifiée avec la description qui suit en relation avec :

la Figure 1 qui représente un dispositif correcteur à deux degrés de liberté de type RST classique avec préfiltre de consigne,

la Figure 2 qui représente un exemple de module de la fonction de sensibilité $S_{\theta p}$ (perturbation de la sortie sur la sortie) dans le cas d'un asservissement rejetant les perturbations statiques avec un correcteur RST classique avec préfiltre de consigne,

la Figure 3 qui représente un exemple de module de la fonction de sensibilité $S_{\theta p}$ (perturbation de la sortie sur la sortie) dans le cas d'un asservissement rejetant les perturbations statiques et une perturbation sinusoïdale à 62,8 rad/s avec un correcteur RST classique avec préfiltre de consigne,

la Figure 4 qui représente une courbe du module $|S_{\theta v}|$ de la fonction de transfert entre la perturbation de charge v(t) et la sortie θ(t),

la Figure 5 qui représente une courbe du module $|S_{\theta p}|$ de la fonction de transfert entre la perturbation sur la sortie p(t) et la sortie θ(t) en relation avec l'application du théorème de Bode-Freudenberg-Looze,

la Figure 6 qui représente une structure d'asservissement classique de type RST ici nommée correcteur central,

la Figure 7 qui représente une structure de commande de moteur en position constituée d'un correcteur central sur lequel on a ajouté deux moyens de calcul supplémentaires, le premier étant un bloc estimateur $E(z^{-1})$ et le second un bloc modificateur $Q(z^{-1})$, ainsi qu'une boucle supplémentaire,

les Figures 8A et 8B qui représentent des courbes du module $|S_{\theta v}|$ de la fonction de transfert entre la perturbation de charge v(t) et la sortie θ(t) avec application d'un niveau de rejet désiré de perturbation sinusoïdale, la Figure 8B donnant la résultante d'un forçage de niveau de rejet en dessus d'une fréquence f_low et au dessous d'une fréquence f_up,

la Figure 9 qui représente la mise en oeuvre dans un plan complexe de la détermination d'un pole de filtrage à titre d'exemple dans le cas où il y a projection d'un zéro du polynôme $A(z^{-1}).Hs(z^{-1})$ du fait qu'il est initialement à l'extérieur d'un cercle de rayon exp(-Te/To) dépendant d'un horizon de filtrage To,

la Figure 10 qui représente schématiquement les étapes de calcul du bloc modificateur à coefficients variables par détermination de ses fonctions constitutives $\alpha(z^{-1})$ et $\beta(z^{-1})$, et

la Figure 11 qui représente schématiquement les étapes de calcul en ligne au sein de la structure de commande de moteur en position pour permettre le rejet des perturbations,

la Figure 12 qui représente l'algorithme de la sous-fonction de calcul du minimum de la marge de retard pour réglage (hors ligne) du correcteur central,

la Figure 13 qui représente l'algorithme de la sous-fonction de calcul du minimum de la marge de module pour réglage (hors ligne) du correcteur central, et

la Figure 14 qui représente l'algorithme permettant finalement de déterminer To et Tc pour réglage (hors ligne) du correcteur central.

A la base, l'invention consiste en l'ajout de deux blocs additifs sur une structure d'asservissement classique de type RST, cette dernière étant représentée Figure 6. Dans la description qui suit, un tel correcteur RST est nommé correcteur central. Le correcteur central, en lui-même, rejette uniquement les perturbations statiques, ses blocs polynomiaux fonctionnels constitutifs sont nommés $Ro(z^{-1})$ et $So(z^{-1})$. De même, dans cette description, on considère la position de consigne ou la vitesse de consigne selon les cas mais ces valeurs se déduisent l'une de l'autre d'une manière simple car la vitesse de consigne est calculée par dérivation de la position de consigne.

Les blocs fonctionnels additifs ajoutés au correcteur central sont au nombre de deux. Le premier bloc fonctionnel additif, $E(z^{-1})$, produit un estimé $\hat{v}(t)$ des perturbations de charge v(t) et il est appelé bloc estimateur. Le second bloc fonctionnel additif, $Q(z^{-1})$, a pour entrée $\hat{v}(t)$ et produit un signal qui peut être injecté en amont du bloc $So(z^{-1})$ et ses coefficients sont calculés afin de modifier la fonction de sensibilité $S_{\theta v}$ du correcteur central de telle sorte à créer une, voire deux, encoches dans $S_{\theta v}$, pour une, voire deux fréquences (le cas de plus de deux fréquence s'avère plus difficile compte tenu du théorème de Bode-Freudenberg-Looze), tout en la modifiant le moins possible aux autres fréquences. Ce second bloc est appelé bloc modificateur. Ce bloc modificateur $Q(z^{-1})$ possède des coefficients variables dans le temps.

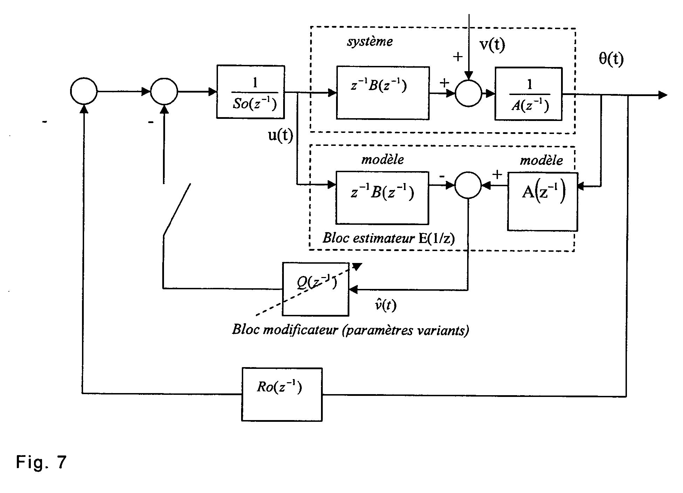

Comme représenté Figure 7, le bloc estimateur à ses deux entrées respectivement en amont et aval de la partie système du dispositif RST et sa sortie $\hat{v}(t)$ est envoyée en entrée du bloc modificateur dont la sortie est envoyée à un soustracteur (ou additionneur avec une entrée correspondante inverseuse ou négative) (la soustraction est effectuée ou non à volonté, du fait de la présence d'un symbole d'interrupteur sur la sortie du bloc modificateur), à l'entrée de la structure RST. On peut remarquer que cette Figure 7, la sortie du bloc modificateur est représentée comme venant se soustraire en aval de l'additionneur (à entrée inverseuse ou négative qui soustrait en fait la sortie de Ro(z$^{-1}$) à l'entrée de la structure RST recevant la consigne pour constituer la rétroaction). Dans une variante non représentée, la sortie du bloc modificateur vient se soustraire en amont de l'additionneur à entrée inverseuse ou négative recevant la rétroaction Ro(z$^{-1}$).

Ainsi, selon le cas, la boucle supplémentaire est intérieure à la boucle en Ro(z$^{-1}$) du correcteur central, l'additionneur supplémentaire (à entrée négative) étant disposé juste en amont du moyen de calcul de la fonction 1/So(z$^{-1}$), ou, la boucle supplémentaire est extérieure à la boucle en Ro(z$^{-1}$) du correcteur central, l'additionneur supplémentaire (à entrée négative) étant disposé en amont de l'additionneur fermant la boucle en Ro(z$^{-1}$).

En revenant à la Figure 7, on peut montrer que les pôles de la boucle fermée du correcteur central seul sont tels que :

$$D\left(z^{-1}\right) = A\left(z^{-1}\right)So\left(z^{-1}\right) + z^{-1} B\left(z^{-1}\right)Ro\left(z^{-1}\right)$$

Le bloc modificateur $Q(z^{-1})$ peut s'écrire :

$$Q(z^{-1}) = \frac{\beta(z^{-1})}{\alpha(z^{-1})}$$

et sa sortie est injecté dans le correcteur RST.

En considérant que le système global bouclé ainsi obtenu, qui est muni de ses deux blocs additifs supplémentaires (blocs estimateur et modificateur), est équivalent à un correcteur RST de blocs R(z$^{-1}$) et S(z$^{-1}$), on a l'équivalence suivante :

$$R(z^{-1}) = \alpha(z^{-1}) \cdot Ro(z^{-1}) + A(z^{-1}) \cdot \beta(z^{-1})$$

$$S(z^{-1}) = \alpha(z^{-1}).So(z^{-1}) - z^{-1} \cdot B(z^{-1}) \cdot \beta(z^{-1})$$

Avec:

$$S(z^{-1}) \cdot u(t) = -R(z^{-1}) \cdot \theta(t)$$

Ce qui aboutit à:

$$So(z^{-1}) \cdot u(t) = -Ro(z^{-1}) \cdot \theta(t) - Q(z^{-1}) \cdot \left[A(z^{-1}) \cdot \theta(t) - z^{-1} B(z^{-1}) \cdot u(t)\right]$$

$$= -Ro(z^{-1}) \cdot \theta(t) - Q(z^{-1}) \cdot \hat{v}(t)$$

où:

$$\hat{v}(t) = A(z^{-1}) \cdot \theta(t) - z^{-1} B(z^{-1}) \cdot u(t)$$

On a alors :

$$\frac{R(z^{-1})}{S(z^{-1})} = \frac{Ro(z^{-1}) \cdot \alpha(z^{-1}) + A(z^{-1}) \cdot \beta(z^{-1})}{So(z^{-1}) \cdot \alpha(z^{-1}) - z^{-1} B(z^{-1}) \cdot \beta(z^{-1})}$$

Le polynôme caractéristique de la boucle fermée s'écrit ainsi:

$$D_\alpha = A(z^{-1}) \cdot \left( So(z^{-1}) \cdot \alpha(z^{-1}) - z^{-1} B(z^{-1}) \beta(z^{-1}) \right) + z^{-1} B(z^{-1}) \cdot \left( Ro(z^{-1}) \cdot \alpha(z^{-1}) + A(z^{-1}) \cdot \beta(z^{-1}) \right)$$

$$D_\alpha = D(z^{-1}) \cdot \alpha(z^{-1})$$

On voit donc que le dénominateur $\alpha(z^{-1})$ introduit des pôles supplémentaires dans la boucle fermée.
Par ailleurs, on peut montrer que la fonction de sensibilité $S_{\theta po}$ du système bouclé constitué uniquement du correcteur central peut s'écrire :

$$S_{\theta po} = \frac{A(z^{-1}) \cdot So(z^{-1})}{D(z^{-1})}$$

La fonction de sensibilité correspondante $S_{\theta p}$ pour le système bouclé muni des deux blocs additifs supplémentaires (blocs estimateur et modificateur) s'écrit :

$$S_{\theta p} = \frac{A(z^{-1}).So(z^{-1})}{D(z^{-1})} - \frac{z^{-1} B(z^{-1}) \cdot Q(z^{-1})}{D(z^{-1})}$$

$$S_{\theta p}(z^{-1}) = S_{\theta po}(z^{-1}) - \frac{z^{-1} B(z^{-1}) Q(z^{-1})}{D(z^{-1})}$$

La fonction de sensibilité $S_{\theta p}$ est donc affectée par ces blocs additifs supplémentaires (blocs estimateur et modificateur). On peut montrer qu'il en est de même pour toutes les fonctions de sensibilité de la boucle fermée.
Il en résulte que l'on peut utiliser ces deux blocs additifs supplémentaires (blocs estimateur et modificateur) afin de modifier les fonctions de sensibilité de l'asservissement et d'ajouter des pôles au système bouclé.
Ces deux propriétés sont utilisées conjointement dans le cadre de l'invention. A partir d'un correcteur central conçu pour rejeter uniquement les perturbations statiques, on adjoint donc ces deux blocs additifs supplémentaires (blocs estimateur et modificateur) pour modifier la fonction de sensibilité $S_{\theta p}$ (et donc $S_{\theta v}$) afin de rejeter en plus une ou deux perturbations sinusoïdales à une fréquence donnée (outre les perturbations statiques), tout en modifiant le moins possible les fonctions de sensibilité du correcteur central aux fréquences éloignées de celles du rejet. La possibilité de rajouter des pôles à la boucle fermée est utile afin d'optimiser la robustesse de la boucle fermée.
On a vu précédemment que l'on a la relation :

$$S(z^{-1}) = \alpha(z^{-1}) So(z^{-1}) - z^{-1} \cdot B(z^{-1}) \cdot \beta(z^{-1})$$

Afin que le système bouclé, tel que muni de ses deux blocs additifs supplémentaires (blocs estimateur et modificateur), puisse rejeter les perturbations statiques, mais aussi les perturbations sinusoïdales à au moins une fréquence f1, il est nécessaire que, suivant le principe du modèle interne, le polynôme $S(z^{-1})$ se factorise en :

$$S(z^{-1}) = Hs(z^{-1}).S'(z^{-1})$$

Le bloc Hs se factorise lui même par : $(1\text{-}z^{-1})$ afin qu'il y ait rejet des perturbations statiques. Soit :

$$Hs(z^{-1}) = (1 - z^{-1}) \cdot Hs1(z^{-1})$$

Afin de déterminer les paramètres à utiliser dans le dispositif, le polynôme $Hs1(z^{-1})$ et les pôles de $Q(z^{-1})$ (zéros de $\alpha(z^{-1})$ ) doivent être calculés dans le but de créer une encoche dans les fonctions de sensibilité pour au moins la fréquence f1 de $S_{\theta p}$ (et donc $S_{\theta v}$), tout en produisant un effet négligeable aux autres fréquences.

Une façon de procéder à la détermination de Hs1 et $\alpha$ consiste à calculer la fonction de transfert :

$$\frac{Hs1(z^{-1})}{\alpha(z^{-1})}$$

par discrétisation d'une fonction de transfert continue qui est dans le cas d'une seule fréquence f1 :

$$F(s) = \frac{s^2 + 2\xi_{num} \cdot 2\pi \cdot f_1 \cdot s + (2\pi \cdot f_1)^2}{s^2 + 2\xi_{den} \cdot 2\pi \cdot f_1 \cdot s + (2\pi \cdot f_1)^2},$$

la discrétisation se faisant par la méthode de Tustin avec « prewarping ».

Si l'on souhaite avoir plus de détails sur le choix de de Hs1 et $\alpha$, on peut se référer à l'ouvrage de Ioan Doré Landau : « Commande des systèmes » éditions Hermès 2002 .

L'atténuation Mt de $S_{\theta p}$ à la fréquence f1 est donnée par la relation :

$$Mt = 20 \cdot \log\left(\frac{\xi_{num}}{\xi_{den}}\right)$$

Il faut donc que $\xi_{num} < \xi_{den}$

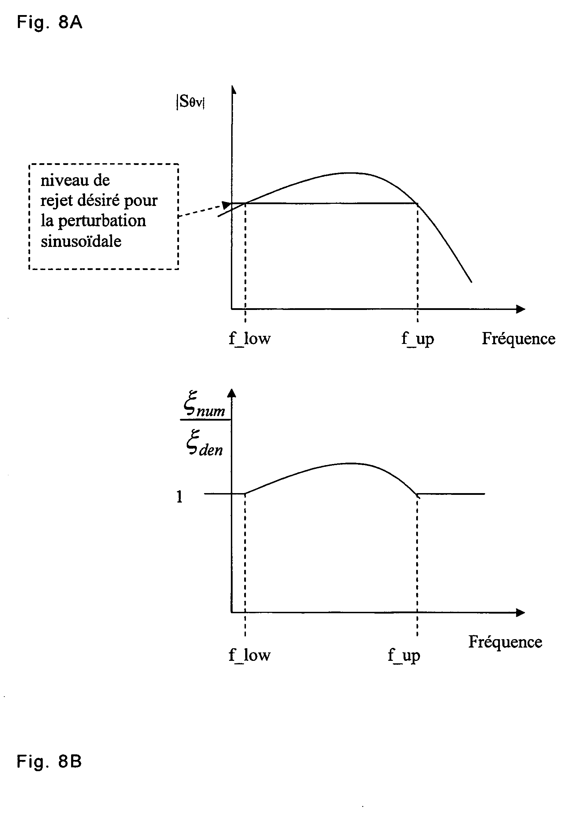

On peut prendre pour $\xi_{den}$ une valeur fixe, par exemple $\xi_{den} = 0{,}1$ qui est une valeur qui convient bien. La valeur de $\xi_{num}$ peut quant à elle, être choisie variable en fonction de la fréquence f1 à rejeter, en particulier en se basant sur le module de $S_{\theta v}$. On peut en particulier chercher à ce que la perturbation rejetée le soit à un niveau constant par rapport à la fonction de sensibilité $S_{\theta v}$ et, en particulier, qu'en deçà d'une fréquence f_low et au-delà d'une fréquence f_up, il n'y ait pas de rejet. Cela détermine le rapport $\dfrac{\xi_{num}}{\xi_{den}}$ comme on peut le voir sur les Figures 8A et 8B.

Afin de déterminer en ligne (temps réel ou quasi-réel) les coefficients de $\beta(z^{-1})$ du bloc modificateur $Q(z^{-1})$, il faut résoudre l'équation suivante :

$$S'(z^{-1}) \cdot Hs(z^{-1}) + z^{-1} B(z^{-1}) \cdot \beta(z^{-1}) = So(z^{-1}) \cdot \alpha(z^{-1})$$

qui est une équation de Bézout et dont les inconnues sont $S'(z^{-1})$ et $\beta(z^{-1})$.

La résolution de cette équation permet d'obtenir $\beta(z^{-1})$. Les paramètres $\alpha(z^{-1})$ et $\beta(z^{-1})$ étant déterminés, le bloc modificateur est également déterminé.

On va maintenant décrire les moyens mis en oeuvre pour déterminer le correcteur central puis, ultérieurement, les moyens de rejet de perturbations sinusoïdales qui ont été vus dans leurs principes juste précédemment.

Le procédé de placement de pôles développé par Philippe de Larminat est maintenant succinctement présenté. Ce procédé est applicable dans le cadre de l'invention moyennant quelques adaptations.

La finalité du placement de pôles selon Philippe de Larminat consiste à faire rapprocher au maximum la commande RST d'une commande LQG monovariable. Cela suppose de choisir le nombre de pôles de la boucle fermée et de les placer approximativement là ou les placerait une commande LQG.

Soit n=deg(A) et $n_s$=deg(Hs).

Philippe de Larminat propose que le nombre de pôles de la boucle fermée (qui est de toute façon supérieur ou égal à 2.n) soit égal à $2.n+n_s$.

Les pôles sont alors regroupés en deux groupes :

- le groupe des pôles dits de filtrage constitué de $n+n_s$ pôles,
- le groupe des pôles dits de commande constitué de n pôles.

Les termes « filtrage » et « commande » sont utilisés par analogie à une commande par retour d'état reconstruit.

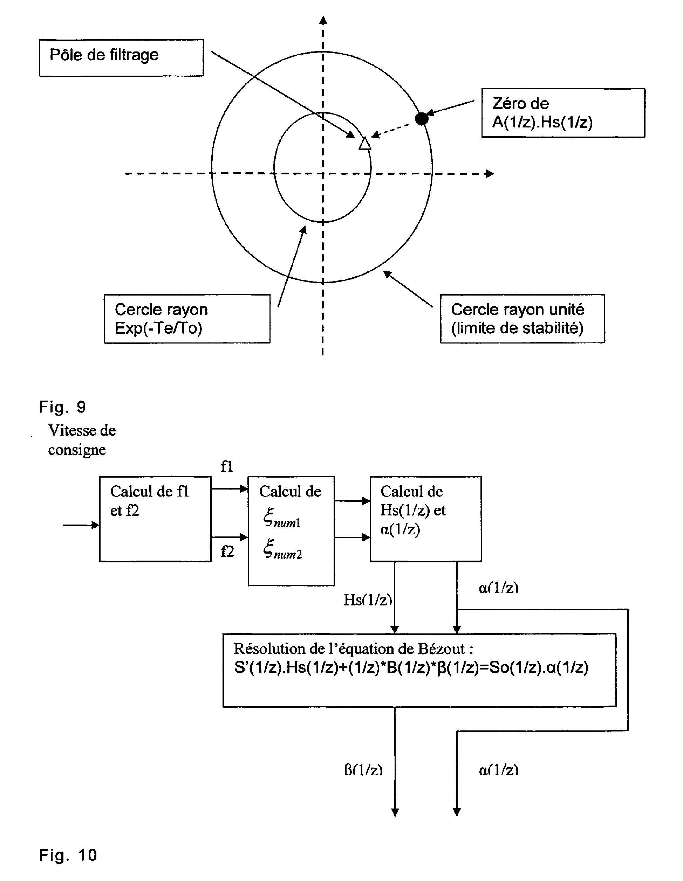

La détermination des pôles de filtrage résulte de l'analyse des zéros du polynôme $A(z^{-1}).Hs(z^{-1})$ et de leurs modifications ou non en fonction de leurs positions respectives dans le plan complexe. Ainsi, les zéros du polynôme $A(z^{-1}).Hs(z^{-1})$ sont projetés sur un cercle de centre zéro et de rayon exp(-Te/To) s'ils sont extérieurs à ce cercle et ils sont laissés inchangés s'ils sont à l'intérieurs ou sur le cercle. On appelle To « horizon de filtrage », il s'agit d'une variable temporelle, et Te est la période d'échantillonnage. A noter que ce traitement est une transposition au cas discret de la méthodologie de Philippe de Larminat qui a été initialement conçue pour les systèmes continus et dont on peut trouver les détails dans « Automatique, commande des systèmes linéaires », hermés,1996. Ce traitement s'applique pour les pôles stables ou en limite de stabilité. On peut noter que dans le cas présent, le système est du type double intégrateur et il n'y a donc pas de pôle strictement instable, les pôles peuvent seulement être en limite d'instabilité. La Figure 9 schématise cette détermination dans le cas où il y a projection d'un zéro du polynôme $A(z^{-1}).Hs(z^{-1})$ du fait qu'il est initialement à l'extérieur du cercle de rayon exp(-Te/To).

La détermination des pôles de commande résulte de l'analyse des zéros du polynôme $A(z^{-1})$ et de leurs modifications ou non en fonction de leurs positions respectives. Le traitement appliqué à ces zéros est semblable au précédent sauf que l'horizon Tc dit « horizon de commande », est cette fois plus petit que l'horizon de filtrage To. Le traitement consiste donc à prendre les zéros de $A(z^{-1})$ et à les projeter de la même façon sur un cercle de centre 0 et de rayon exp(-Te/Tc) s'ils sont en dehors dudit cercle et de les laisser inchangés dans le cas contraire. A noter encore une fois que ce traitement est une transposition au cas discret de la méthodologie de Philippe de Larminat qui a été initialement conçue pour les systèmes continus et dont on peut trouver les détails dans « Automatique, commande des systèmes linéaires », hermés,1996. Comme indiqué, Tc qui est l'horizon de commande, est plus petit que To. De préférence, on prend :

$$To/5 < Tc < To/2$$

Cette stratégie de placement de pôles vise à ce que la commande se rapproche le plus possible d'une commande LQG-LTR. Cette façon de faire présente l'avantage de pouvoir régler un correcteur RST au moyen de deux paramètres de haut niveau aux effets distincts.

Soit, maintenant, $F(z^{-1})$ le polynôme de filtrage dont les zéros sont les pôles de filtrage et $C(z^{-1})$ le polynôme de commande dont les zéros sont les pôles de commande.

Le deuxième terme de l'équation de Bézout du calcul du correcteur RST $D(z^{-1})$ s'écrit :

$$D(z^{-1}) = F(z^{-1}) \cdot C(z^{-1})$$

En s'inspirant d'une commande par retour d'état reconstruit où l'observateur d'état est inobservable depuis la sortie comme dans la méthodologie de Philippe de Larminat, le polynôme T(z⁻¹) du bloc RST est alors choisi tel que :

$$T(z^{-1}) = F(z^{-1})$$

La fonction de transfert entre w(t) et θ(t) s'écrit alors :

$$\frac{\theta(t)}{w(t)} = \frac{z^{-1} B(z^{-1})}{C(z^{-1})}$$

On voit ainsi que les pôles de commande ont une influence claire sur le suivi de consigne. Les pôles de filtrage ont, quand à eux, une influence sur le rejet des perturbations.

Si l'on considère à titre d'exemple le cas où le système se comporte en double intégrateur, $A(z^{-1})$ possède deux zéros en +1. Pour ce qui concerne le rejet des perturbations statiques $Hs(z^{-1})$ = 1- $z^{-1}$ possède un zéros en +1.

Il en résulte lors du traitement des zéros que les trois zéros de A(z⁻¹).Hs(z⁻¹) sont projetés en exp(-Te/To) pour constituer le polynôme de filtrage $F(z^{-1})$ . Afin de constituer le polynôme de commande $C(z^{-1})$ , on va projeter les deux zéros de $A(z^{-1})$ en exp(-Te/Tc).

Les polynômes $F(z^{-1})$ et $C(z^{-1})$ étant ainsi déterminés, il reste à résoudre l'équation de Bézout afin de déterminer $Ro(z^{-1})$ et $So(z^{-1})$.

Le procédé de synthèse de correcteur de Philippe de Larminat qui vient d'être présenté et appliqué à système particulier est utilisé dans le cadre de l'invention. Il sert de base à la synthèse du correcteur central et il est complété par un procédé destiné au rejet d'une/de perturbations sinusoïdales.

On a vu précédemment que dans le cas où l'on cherche à éliminer une perturbation sinusoïdale à la fréquence f1 en plus des perturbations statiques, il faut que le polynôme Hs puisse s'écrire :

$$Hs(z^{-1}) = (1 - z^{-1}) \cdot Hs1(z^{-1})$$

Par ailleurs, il est nécessaire de rajouter des pôles au système bouclé pour des raisons de robustesse, c'est-à-dire au polynôme $D(z^{-1})$, afin que le polynôme de la boucle fermée puisse s'écrire :

$$D(z^{-1}).\alpha(z^{-1})$$ .

Hs1 et $\alpha$ peuvent être choisis par le calcul indiqué précédemment.

Comme on l'a vu, on arrive à la conclusion qu'il faut que $\xi_{num} < \xi_{den}$.

Cette façon de procéder présente l'avantage de permettre de créer une encoche dans la fonction de sensibilité directe qui est $S_{\theta p}$ sans effet notable dans la fonction de sensibilité à des fréquences éloignées de f1.

La valeur de $\xi_{den}$ détermine la largeur de « l'encoche » qui apparaît dans la fonction de sensibilité. Une valeur de 0,1 peut être choisie et on peut la fixer une fois pour toutes.

On va maintenant décrire à titre de nouvel exemple, le cas où l'on cherche à rejeter simultanément deux perturbations sinusoïdales aux fréquences f1 et f2 (en particulier où f2=2*f1, c'est-à-dire une fréquence fondamentale et un harmonique). Dans ce cas, il faut que la fonction de transfert discrète :

$$\frac{Hs1(z^{-1})}{\alpha(z^{-1})}$$

soit obtenue à partir de la fonction de transfert continue :

$$F(s) = \frac{s^2 + 2\xi_{num1} \cdot 2\pi \cdot f_1 \cdot s + (2\pi \cdot f_1)^2}{s^2 + 2\xi_{den1} \cdot 2\pi \cdot f_1 \cdot s + (2\pi \cdot f_1)^2} \cdot \frac{s^2 + 2\xi_{num2} \cdot 2\pi \cdot f_2 \cdot s + (2\pi \cdot f_2)^2}{s^2 + 2\xi_{den2} \cdot 2\pi \cdot f_2 \cdot s + (2\pi \cdot f_2)^2}$$

dans laquelle $\xi_{num1}$ et $\xi_{den1}$ se rapportent à la fréquence f1 et $\xi_{num2}$ et $\xi_{den2}$ se rapportent à la fréquence f2.

Dans ce cas, on peut prendre par exemple $\xi_{den1} = \xi_{den2} = 0,1$ et choisir la valeur de $\xi_{num1}$ et $\xi_{num2}$ en fonction de f1 et f2.

D'une façon générale, on peut dire que si les marges de retard et de module du correcteur central sont MR0 et MM0, les marges du système bouclé rejetant en plus une voire deux perturbations sinusoïdales aux fréquences f1 et f2 seront inférieures à MR0 et MM0.

Si l'on note MR(f1,f2) la marge de module du système bouclé rejetant deux perturbations sinusoïdales aux fréquences f1 et f2, on a la relation :

$$MR(f1,f2) < MR0$$

Si l'on note MM(f1,f2) la marge de retard du système bouclé rejetant deux perturbations sinusoïdales aux fréquences f1 et f2, on a la relation :

$$MM(f1,f2) < MM0$$

Dans l'exemple de mise en oeuvre donné dans la description qui suit, on considère que le rejet de perturbations sinusoïdales consiste dans le rejet d'une perturbation fondamentale à la fréquence f1 et du rejet du second harmonique à la fréquence f2=2*f1.

A supposer que les paramètres To et Tc du correcteur central ont déjà été définis dans le cas d'un réglage particulier. A partir de ce jeu de paramètres, on peut calculer la fonction de sensibilité $S_{\theta v}$ , ainsi que sa norme H∞ qui représente le maximum du module de $S_{\theta v}$ .

Soit $\psi_1$ le niveau choisi de l'atténuation de la fondamentale de la perturbation de charge à la fréquence du maximum de $S_{\theta v}$ .

Soit $\psi_2$ le niveau choisi de l'atténuation de l'harmonique 2 de la fondamentale de la perturbation de charge à la fréquence du maximum de $S_{\theta v}$.

Alors, dans le cas où l'on souhaite que le niveau désiré de rejet absolu de la perturbation soit le même à toutes les fréquences utiles, on peut déduire la valeur $\xi_{num1}(f)$ et $\xi_{num2}(f)$ au moyen des relations suivantes :

$$\xi_{num1}(f) = \min\left(\frac{\xi_{den1} \cdot \psi_1}{|S_{\theta v}(f)|}, \xi_{den1}\right)$$

$$\xi_{num2}(f) = \min\left(\frac{\xi_{den2} \cdot \psi_2}{\left|S_{\theta'}(f)\right|}, \xi_{den2}\right)$$

Les valeurs de $\xi_{num1}$(f) et $\xi_{num2}$(f) sont déterminées lors de la synthèse (ou calcul) du correcteur central (hors ligne) et peuvent être ensuite intégrées dans le calculateur sous forme de tables.

Les polynômes à paramètres variant du bloc modificateur $Q(z^{-1})$ qui sont $\alpha(z^{-1})$ et $\beta(z^{-1})$ sont eux déterminés en ligne (temps réel ou quasi réel) selon les étapes procédurales représentées sur la Figure 10 pour chaque vitesse de consigne.

Dans un premier temps la/les fréquences de la/des perturbations sinusoïdales à rejeter sont calculées et, dans cet exemple de la Figure 10, deux fréquences.

Dans un deuxième temps on calcule pour chaque fréquence le $\xi_{num}$ correspondant

Dans un troisième temps on calcule $Hs(z^{-1})$ et $\alpha(z^{-1})$.

Enfin, l'équation de Bezout suivante :

$$S'(z^{-1}).Hs(z^{-1})+(z^{-1})*B(z^{-1})*\beta(z^{-1})=So(z^{-1}).\alpha(z^{-1})$$

est résolue pour déterminer $\beta(z^{-1})$. Une fois ces paramètres $\alpha(z^{-1})$ et $\beta(z^{-1})$ calculés, le bloc modificateur est déterminé car

$$Q(z^{-1}) = \frac{\beta(z^{-1})}{\alpha(z^{-1})}$$

et sa sortie, qui va être envoyée (si cela est choisi) au soustracteur, vers l'entrée du correcteur RST peut être calculée à partir de l'estimé $\hat{v}(t)$ des perturbations de charge produite par le bloc estimateur.

Il est nécessaire de pouvoir régler (hors ligne) le correcteur central et on va donc maintenant décrire cette possibilité.

La méthode de réglage du correcteur central consiste en pratique à calculer To et Tc sous la contrainte que quelque soit la ou les fréquences de perturbations sinusoïdales, le respect de marges minimales de retard et de module soit effectif.

Soit mrc : la marge de retard « cible », c'est-à-dire la marge de retard à respecter impérativement quelque soit la fréquence de perturbation à rejeter.

Soit mmc : la marge de module « cible », c'est-à-dire la marge de module à respecter impérativement quelque soit la fréquence de perturbation à rejeter.

On cherche à déterminer To et Tc de telle sorte que les performances dynamiques soient les meilleures possible, en tenant compte des contraintes sur mrc et mmc, marges fixées préalablement.

L'algorithme présenté ci-après est destiné à être mis en oeuvre au moyen d'un automate programmé (par exemple câblé ou préprogrammé par mémoire morte) ou programmable avec le programme adapté et notamment dans un ordinateur ou calculateur programmable par programme.

Pour simplifier, dans cet exemple, on suppose que $\xi_{den1}$ et $\xi_{den2}$ sont fixés une fois pour toutes et qu'il en est de même pour les valeurs de $\psi_1$ et $\psi_2$ qui sont également fixées. De plus, dans cet exemple simplifié, on prend f2=2*f1, ce qui fait que les fonctions qui vont suivre ne sont dépendantes que de f1.

On utilise en particulier les fonctions suivantes :

-[MR,MM]=marges(To,Tc)

Cette fonction détermine la marge de retard MR et la marge de module MM du système bouclé, pour un jeu de paramètres To et Tc, par calcul du minimum des marges de retard sur toute la plage de fréquences de perturbations f1, en fonction de To et Tc donnés. Le calcul de MR se fait par appel à une sous-fonction « marge_retard_min », le calcul de MM se fait par appel à une sous-fonction « marge_module_min ».

Ces sous-fonctions sont basées sur des calculs d'optimisation qui sont plus efficaces si l'on peut partir de valeurs de départ pas trop éloignées de celles en rapport avec l'optimum recherché. Or on peut montrer que certaines de ces valeurs de départ peuvent être déduites de paramètres fixés ou connus/calculés à priori.

En effet, on peut calculer la courbe de la marge de retard en fonction de f1 (fréquence du fondamental de la perturbation et dans le cas où f2=2*f1) ainsi que la courbe de la marge de module en fonction de f1, pour un niveau d'atténuation donné du fondamental f1, $\psi1$ de la perturbation à rejeter et pour un niveau d'atténuation donné de l'harmonique f2, $\psi2$, de la perturbation à rejeter. Les courbes correspondantes possèdent chacune des minima locaux et un minimum global. De nombreux essais empiriques ont montré que pour un jeu fixé de paramètres $\psi1$ et $\psi2$, la fréquence du minimum global sur chacune des courbes correspondantes varie seulement en fonction de To et Tc, et peut être grossièrement approximée à partir de l'indication de la fréquence du maximum de $S\theta po$ qui est connue. On a ainsi pu montrer que la fréquence du minimum de MR(f1), pour une configuration donnée de $\psi1$ et $\psi2$ est grossièrement égale à la moitié de la fréquence du maximum de $S\theta po$ et des essais extensifs ont également montré que cette propriété est conservé quelque soient To et Tc pourvu que $\psi1$ et $\psi2$ ne varient pas. Il en est de même pour la courbe MM(f1), le minimum local de la courbe se trouve grossièrement à une fréquence qui est le double de la fréquence du maximum de $S\theta po$. Cette dernière propriété est conservée quelque soient To et Tc pourvu que $\psi1$ et $\psi2$ ne varient pas. Ces indications grossières sur la localisation des fréquences des minima globaux de chacune des deux courbes fournissent un point de départ de l'algorithme d'optimisation (par exemple Newton), dont la convergence vers le minimum permet est assuré si la fréquence d'initialisation de l'algorithme est suffisamment proche du minimum global. On peut ainsi déterminer efficacement par optimisation le minimum de la marge retard ainsi que le minimum de la marge de module lorsque l'on assure le rejet de perturbations sinusoïdales.

## -[MR]=marge_retard_min(f1,To,Tc) :

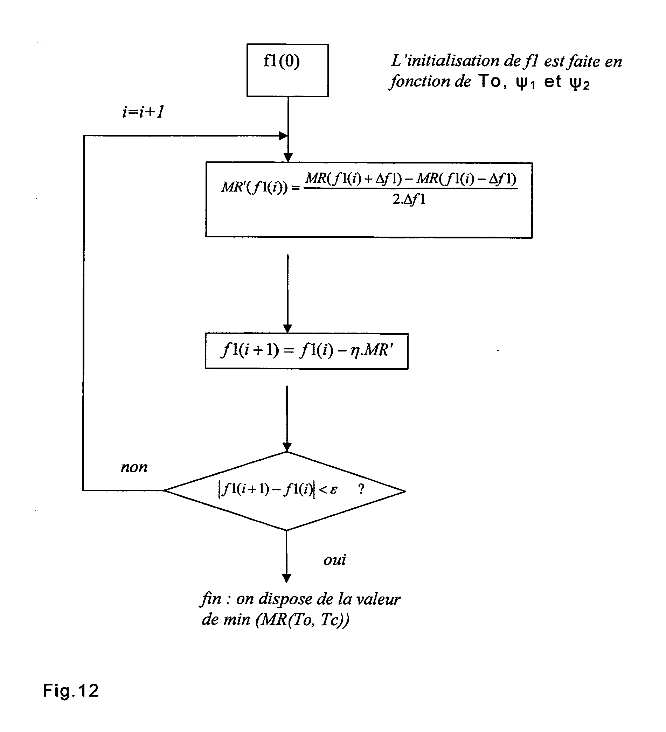

Cette sous-fonction calcule le minimum de MR(f1) pour des valeurs données de To et Tc, sur toute la plage des valeurs de f1. Ce calcul peut se faire par optimisation avec un algorithme de descente par exemple l'algorithme de la sécante, à condition d'initialiser l'algorithme avec une valeur de f1 proche de l'optimum qui peut être grossièrement connu en fonction de To, $\psi_1$ et $\psi_2$. L'algorithme correspondant de calcul du minimum de la marge de retard pour un jeu de paramètre To, Tc donné ($\psi1$ et $\psi2$ ayant été fixés une fois pour toutes préalablement aux calculs) est donné sur la Figure 12. Au départ on utilise une valeur f1 (0) fonction de To, $\psi_1$ et $\psi_2$ et qui est proche de l'optimum comme expliqué ci-dessus. Par des étapes itératives dans lesquelles des variations à divers ordres sont considérées, on détermine le minimum de MR(To,Tc) en prenant comme critère d'arrêt le fait que la variation de f1 d'une itération à la suivante devient, en valeur absolue, inférieure à un seuil $\varepsilon$ prédéfini.

## -[MM]=marge_module_min(f1,To,Tc) :

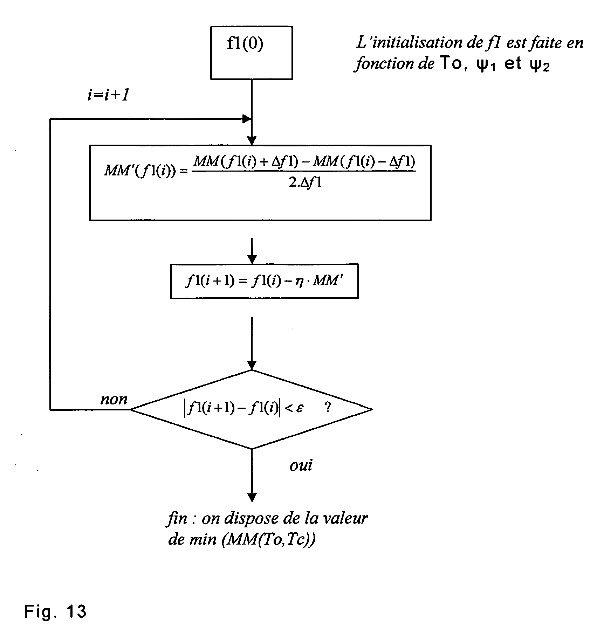

Cette sous-fonction calcule le minimum de MM(f1) pour des valeurs données de To et Tc, sur toute la plage des valeurs de f1. Ce calcul peut se faire par optimisation avec un algorithme de descente par exemple l'algorithme de la sécante, à condition d'initialiser l'algorithme avec une valeur de f1 proche de l'optimum qui peut être grossièrement connue en fonction de To, $\psi_1$ et $\psi_2$. L'algorithme correspondant de calcul du minimum de la marge de module pour un jeu de paramètre To, Tc donné ($\psi1$ et $\psi2$ ayant été fixés une fois pour toutes préalablement aux calculs) est donné sur la Figure 13. Au départ on utilise une valeur f1(0) fonction de To, $\psi_1$ et $\psi_2$ et qui est proche de l'optimum comme expliqué ci-dessus. Par des étapes itératives dans lesquelles des variations à divers ordres sont considérées, on détermine le minimum de MM(To,Tc) en prenant comme critère d'arrêt le fait que la variation de f1 d'une itération à la suivante devient, en valeur absolue, inférieure à un seuil $\varepsilon$ prédéfini.

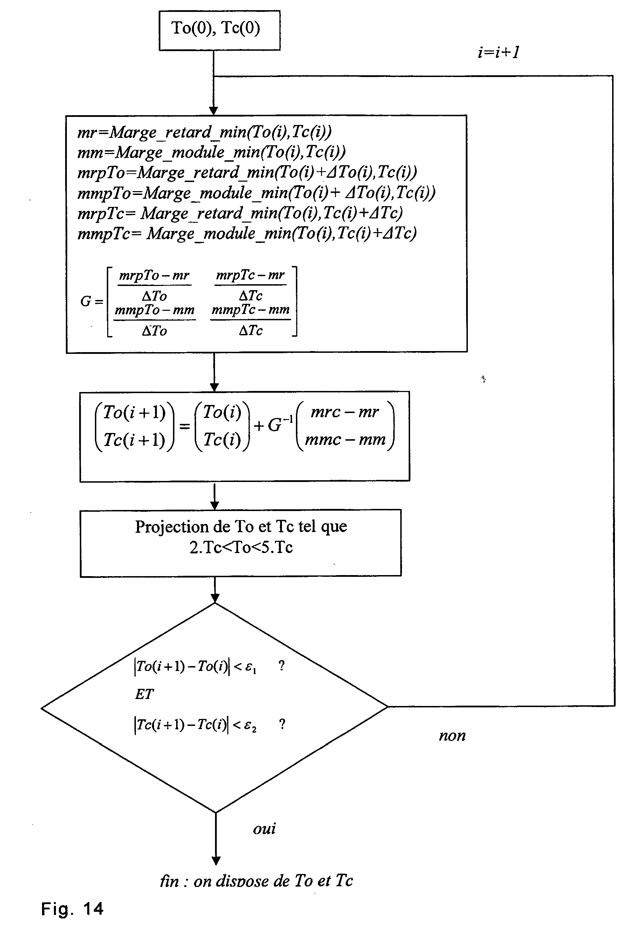

Dans la fonction [MR,MM]=marges(To,Tc), une optimisation est faite de façon à déterminer les valeurs To et Tc qui permettent que MR=mrc et MM=mmc. Cette optimisation peut en particulier être faite en utilisant l'algorithme de « Newton projeté » de façon à respecter la contrainte To/5≤Tc≤To/2 précédemment donnée à titre d'exemple. L'algorithme correspondant est présenté Figure 14 avec des calculs itératifs d'optimisation sous contrainte et ayant comme critère d'arrêt le fait que To et Tc ne varient d'une itération à l'autre que d'une manière insignifiante (variations absolues inférieures à des seuils prédéfinis $\varepsilon_1$ et $\varepsilon_2$).

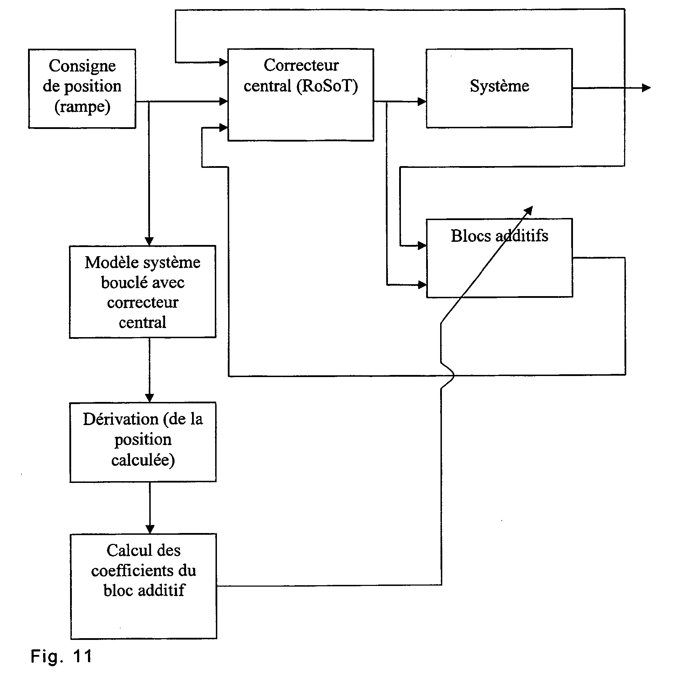

La Figure 11, donne un schéma structuro-fonctionnel d'une application de l'invention avec en entrée une consigne de position sous forme d'un signal rampe. Cette application combine des moyens de calcul notamment de type ordinateur avec programme et des moyens effecteurs notamment un moteur et au moins un capteur (ou encodeur) qui donne en sortie une information de position sur le moteur. Cette consigne de position passe d'une part dans un correcteur central dont les paramètres ou coefficients ont été calculés initialement (dans une variante ils peuvent être calculés en temps réel) et qui produit un signal de commande de la partie comportant le moteur (appelé sur la Figure 11 système). Les blocs additifs (blocs estimateur et modificateur) reçoivent en entrée le signal de sortie du correcteur central et du moteur (son capteur) et produisent un signal renvoyé en entrée du correcteur central (de préférence ce signal renvoyé peut être ou non utilisé grâce à un commutateur comme vu en relation avec la Figure 7). Comme les blocs additifs, le bloc modificateur en pratique, ont des paramètres (ou coefficients, ces termes étant équivalents) qui sont variables, on les détermine en temps réel ou quasi réel à partir de la consigne de position par des calculs basés sur un modèle constitué d'un système bouclé avec correcteur central à partir duquel on peut dériver la position calculée et enfin calculer lesdits coefficients.

On comprend que le terme « signal » utilisé dans cette description doit être considéré dans son acception large et que selon l'endroit où il se situe et les moyens matériels mis en oeuvre, il peut correspondre à des valeurs numériques (signal numérique échantillonné) ou analogique (courant moteur par exemple) et que des dispositifs de conversion adaptés sont mis en oeuvre afin de rendre compatible le signal avec les entités avec lesquelles il est en relation. Par exemple, un convertisseur numérique-analogique peut être mis en oeuvre dans le correcteur central pour l'attaque du moteur. De même, un convertisseur analogique-numérique ou fréquence-numérique peut être mis en ouvre en sortie du capteur. En pratique, les signaux qui sont soumis à des calculs sont échantillonnés et sont des signaux numériques.

Les exemples donnés sont indicatifs et permettent de comprendre que les procédés utilisés sont applicables à d'autres configurations plus ou moins évoluées notamment pour ce qui concerne la précision du modèle du système ou son degré.

On comprend que des moyens équivalents à ceux décrits entrent dans le cadre de l'invention. Ainsi, des données ou signaux peuvent se déduirent les uns des autres par des opérations simples comme par exemple la position évolutive et la vitesse et il est alors possible de suivre l'un ou l'autre paramètre pour en déduire l'autre ou l'un. De même les opérations/fonctions peuvent être décomposées ou réparties d'une manière différente. Par exemple le bloc modificateur peut produire un signal modificateur inversé qui sera alors envoyé à une entrée positive (il y a addition au lieu d'une soustraction contrairement au cas d'une entrée négative ou inversée comme représentée Figure 7) de l'additionneur amont de la fonction $1/So(z^{-1})$.

## Revendications

1. Procédé de rejet robuste des perturbations périodiques dans une structure de commande de moteur en position, les perturbations périodiques étant assimilées à au moins une oscillation sinusoïdale à une fréquence déterminable proportionnelle à la vitesse angulaire de l'axe dudit moteur, la structure de commande recevant un signal de consigne en position c(t) mettant en oeuvre une boucle de contrôle de position de l'axe dudit moteur, ladite structure de commande étant du type correcteur RST et étant échantillonnée afin de permettre des calculs numériques dans un calculateur programmable pour produire des résultats destinés à la commande du moteur, le correcteur RST mettant en oeuvre des moyens de calcul correspondant, d'une part, à une fonction $1/So(z^{-1})$ en amont du moteur et produisant un signal de commande u(t) et, d'autre part, une fonction $Ro(z^{-1})$ dans sa boucle qui reçoit en entrée un signal de position θ(t) d'un capteur de position sur l'axe dudit moteur, l'ensemble regroupant le moteur, le capteur de position, les moyens de calculs des fonctions $1/So(z^{-1})$ et $Ro(z^{-1})$ avec bouclage étant appelé correcteur central, **caractérisé en ce que** :

   - on ajoute au correcteur central deux moyens de calcul supplémentaires, le premier étant un bloc estimateur $E(z^{-1})$ et le second un bloc modificateur $Q(z^{-1})$, ainsi qu'une boucle supplémentaire,
   - on modélise le moteur sous forme d'un système modélisé soumis à une perturbation de charge v(t), ledit système modélisé recevant en entrée le signal de commande u(t) et produisant en sortie le signal de position θ(t), le modèle du système appliquant sur le signal de commande u(t) une fonction $z^{-1}B(z^{-1})$ pour produire un signal additionné à la perturbation de charge v(t), la résultante étant soumise à une fonction $1/A(z^{-1})$ pour produire le signal de position θ(t),
   - on calcule un signal d'estimation de la perturbation de charge $\hat{v}(t)$ dans le bloc estimateur $E(z^{-1})$ recevant en première entrée le signal de commande u(t) et en seconde entrée le signal de position θ(t), dans ledit bloc estimateur le signal de commande u(t) étant soumis à la fonction $z^{-1}B(Z^{-1})$ pour produire un signal qui est soustrait au résultat de l'application de la fonction $A(z^{-1})$ sur le signal de position θ(t), la soustraction donnant le signal d'estimation de la perturbation de charge $\hat{v}(t)$,
   - on applique le signal d'estimation de la perturbation de charge $\hat{v}(t)$ au bloc modificateur $Q(z^{-1})$ pour produire un signal modificateur appliqué à une entrée négative d'un additionneur supplémentaire disposé en amont du moyen de calcul de la fonction $1/So(z^{-1})$ et formant ainsi la boucle supplémentaire, le bloc modificateur ayant une fonction de transfert variable en fonction de la au moins une fréquence déterminable et qui est calculée en temps réel ou quasi-réel sous la contrainte que la fonction de sensibilité de position $S_{θp}$ de la structure de commande comporte un creux pour la au moins une fréquence déterminable.

2. Procédé selon la revendication 1, **caractérisé en ce que** la boucle supplémentaire est intérieure à la boucle en Ro ($z^{-1}$) du correcteur central, l'additionneur supplémentaire étant disposé juste en amont du moyen de calcul de la fonction 1/So($z^{-1}$).

3. Procédé selon la revendication 1 ou 2, **caractérisé en ce que** le correcteur central est calculé préalablement, hors ligne, pour rejeter des perturbations statiques et les fonctions So et Ro sont mémorisées pour être directement utilisées ultérieurement lors des calculs en temps réel.

4. Procédé selon la revendication 3, **caractérisé en ce que** lors du calcul du correcteur central dans lequel on met en oeuvre une étape de détermination d'un horizon de filtrage To et d'un horizon de commande Tc tels que Tc < To avec, de préférence, To/5<Tc<To/2, ladite étape de détermination de l'horizon de filtrage To et de l'horizon de commande Tc est effectuée sous la contrainte que quelle/quelles que soit/soient la/les fréquences à rejeter, la marge de retard soit supérieure à une marge de retard seuil prédéterminée mrc et la marge de module soit supérieure à une marge de module seuil prédéterminée mmc.

5. Procédé selon la revendication 4, **caractérisé en ce que** dans l'étape de détermination de l'horizon de filtrage To et de l'horizon de commande Tc sous contrainte, on calcule un ensemble de minima des marges de retard et des marges de module, les minima étant fonction des valeurs possibles de la/des fréquences à rejeter et étant également obtenus en faisant varier les valeurs de To et Tc et **en ce qu'**à partir de ensemble de minima des marges de retard et des marges de module on remonte aux valeurs To et Tc qui assurent le respect de la contrainte que la marge de retard soit supérieure à une marge de retard seuil prédéterminée mrc et la marge de module soit supérieure à une marge de module seuil prédéterminée mmc et, en plus, de préférence, que To/5<Tc<To/2.

6. Procédé selon lune quelconque des revendications précédentes, **caractérisé en ce qu'**on calcule la fonction de transfert Q($z^{-1}$) du bloc modificateur en considérant le rapport de polynômes

$$Q(z^{-1}) = \frac{\beta(z^{-1})}{\alpha(z^{-1})}$$

à paramètres variables et on assimile par équivalence la structure de commande globale à un correcteur RST en R et S de blocs de fonctions polynomiales

$$R(z^{-1}) = \alpha(z^{-1}) \cdot Ro(z^{-1}) + A(z^{-1}) \cdot \beta(z^{-1})$$

$$S(z^{-1}) = \alpha(z^{-1}).So(z^{-1}) - z^{-1} \cdot B(z^{-1}) \cdot \beta(z^{-1})$$

on factorise la fonction polynomiale S($z^{-1}$) telle que pré-spécifiée en S($z^{-1}$)=Hs($Z^{-1}$).S'($z^{-1}$) pour faire apparaître un terme en (1-$z^{-1}$) correspondant au rejet de perturbations statiques et des termes S'($z^{-1}$) et Hs1 ($Z^{-1}$), S($z^{-1}$) s'exprimant

$$S(z^{-1}) = (1-z^{-1}).Hs1(z^{-1}).S'(z^{-1})$$

et **en ce que** l'on détermine les polynômes Hs1 et $\alpha$ par discrétisation d'une fonction de transfert continue dépendant du niveau de rejet Mt souhaité à la fréquence considérée, le polynôme $\beta$ étant ensuite obtenu par la résolution de l'équation de Bézout suivante

$$S'(z^{-1}) \cdot Hs(z^{-1}) + z^{-1} B(z^{-1}) \cdot \beta(z^{-1}) = So(z^{-1}) \cdot \alpha(z^{-1})$$

**7.** Procédé selon la revendication 6, **caractérisé en ce que** la fonction de transfert continue dépendant du niveau de rejet souhaité à la fréquence considérée dans le cas d'une seule fréquence f1 est :

$$F(s) = \frac{s^2 + 2\xi_{num} \cdot 2\pi \cdot f_1 \cdot s + (2\pi \cdot f_1)^2}{s^2 + 2\xi_{den} \cdot 2\pi \cdot f_1 \cdot s + (2\pi \cdot f_1)^2}$$

**8.** Procédé selon la revendication 6, **caractérisé en ce que** la fonction de transfert continue dépendant du niveau de rejet souhaité à la fréquence considérée dans le cas de deux fréquences f1 et f2 est :

$$F(s) = \frac{s^2 + 2\xi_{num1} \cdot 2\pi \cdot f_1 \cdot s + (2\pi \cdot f_1)^2}{s^2 + 2\xi_{den1} \cdot 2\pi \cdot f_1 \cdot s + (2\pi \cdot f_1)^2} \cdot \frac{s^2 + 2\xi_{num2} \cdot 2\pi \cdot f_2 \cdot s + (2\pi \cdot f_2)^2}{s^2 + 2\xi_{den2} \cdot 2\pi \cdot f_2 \cdot s + (2\pi \cdot f_2)^2}$$

**9.** Procédé selon la revendication 6, 7 ou 8 **caractérisé en ce que** le niveau de rejet Mt pour une fréquence $f_i$ donnée est calculé par $Mt_i = 20.\log(\xi num_i / \xi den_i)$ et, de préférence on prend $\xi den_i = 0,1$.

**10.** Dispositif pour rejet robuste des perturbations périodiques dans une structure de commande de moteur en position, les perturbations périodiques étant assimilées à au moins une oscillation sinusoïdale à une fréquence déterminable proportionnelle à la vitesse angulaire de l'axe dudit moteur, la structure de commande recevant un signal de consigne en position c(t) mettant en oeuvre une boucle de contrôle de position de l'axe dudit moteur, ladite structure de commande étant du type correcteur RST et étant échantillonnée afin de permettre des calculs numériques dans un calculateur programmable pour produire des résultats destinés à la commande du moteur, le correcteur RST mettant en oeuvre des moyens de calcul correspondant, d'une part, à une fonction $1/So(z^{-1})$ en amont du moteur et produisant un signal de commande u(t) et, d'autre part, une fonction $Ro(z^{-1})$ dans sa boucle qui reçoit en entrée un signal de position θ(t) d'un capteur de position sur l'axe dudit moteur, l'ensemble regroupant le moteur, le capteur de position, les moyens de calculs des fonctions $1/So(z^{-1})$ et $Ro(z^{-1})$ avec bouclage étant appelé correcteur central, **caractérisé en ce qu'**il comporte, par ajout au correcteur central, des moyens pour l'exécution du procédé de l'une quelconque des revendications précédentes, lesdits moyens étant deux moyens de calcul supplémentaires, le premier étant un bloc estimateur $E(z^{-1})$ et le second un bloc modificateur $Q(z^{-1})$, ainsi qu'une boucle supplémentaire, le bloc estimateur $E(z^{-1})$ permettant le calcul d'un signal d'estimation de la perturbation de charge $\hat{v}(t)$, ledit bloc estimateur recevant en première entrée le signal de commande u(t) et en seconde entrée le signal de position θ(t), le bloc modificateur $Q(z^{-1})$ recevant en entrée le signal d'estimation de la perturbation de charge $\hat{v}(t)$ pour produire un signal modificateur appliqué à une entrée négative d'un additionneur supplémentaire disposé en amont du moyen de calcul de la fonction $1/So(z^{-1})$ et formant ainsi la boucle supplémentaire, le bloc modificateur ayant une fonction de transfert variable en fonction de la au moins une fréquence déterminable et qui est calculée en temps réel ou quasi-réel sous la contrainte que la fonction de sensibilité de position $S_{\theta p}$ de la structure de commande comporte un creux pour la au moins une fréquence déterminable.

## Claims

**1.** Method for robust rejection of the periodic disturbances in a motor-position control structure, the periodic disturbances being liken to at least one sinusoidal oscillation at a determinable frequency proportional to the angular speed of the axis of said motor, the control structure receiving a position reference input signal *c(t)* implementing a loop for controlling the position said motor axis, said control structure being of the RST controller type and being sampled so that numerical computations can be made in a programmable calculator to produce results intended to control the motor, the RST controller implementing computing means corresponding, on the one hand, to a function *1/So(z⁻¹)* upstream from the motor and producing a control signal *u(t)* and, on the other hand, a function *Ro(z⁻¹)* in the loop thereof which receives as an input a position signal θ*(t)* from a position sensor on said motor axis, wherein the system including the motor, the position sensor, the means for computing the functions *1/So(z⁻¹)* and *Ro(z⁻¹)*, in a loop, is called central controller, **characterized in that**:

- to the central controller are added two additional computing means, the first one being an estimator block $E(z^{-1})$ and the second one a modifier block $Q(z^{-1})$, as well as an additional loop,
- the motor is modelled as a modelled system subjected to a load disturbance v(t), said modelled system receiving the control signal $u(t)$ as an input and producing the position signal $\theta(t)$ as an output, the system model applying a function $(z^{-1})B(z^{-1})$ to the control signal $u(t)$ to produce a signal added to the load disturbance $v(t)$, the resultant being subjected to a function $1/A(z^{-1})$ to produce the position signal $\theta(t)$,
- a load disturbance estimation signal $\hat{v}(t)$ is computed in the estimator block $E(z^{-1})$ that receives the control signal $u(t)$ as a first input and the position signal $\theta(t)$ as a second input, and in which the control signal $u(t)$ is subjected to the function $z^{-1}B(z^{-1})$ to produce a signal, which is then subtracted from the result of the application of the function $A(z^{-1})$ to the position signal $\theta(t)$, this subtraction giving the load disturbance estimation signal $\hat{v}(t)$,
- the load disturbance estimation signal $\hat{v}(t)$ is applied to the modifier block $Q(z^{-1})$ to produce a modification signal, which is applied to a negative input of an additional adder arranged upstream from the means for computing the function $1/So(z^{-1})$ and then forming the additional loop, the modifier block having a transfer function that varies as a function of the at least one determinable frequency and which is computed in real or quasi-real time under the constraint that the position sensitivity function $S_{\theta p}$ of the control structure comprises a notch for the at least one determinable frequency.

2. Method according to claim 1, **characterized in that** the additional loop is internal to the loop in $Ro(z^{-1})$ of the central controller, the additional adder being arranged just upstream from the means for computing the function $1/So(z^{-1})$.

3. Method according to claim 1 or 2, **characterized in that** the central controller is computed beforehand, off-line, to reject static disturbances and the functions $So$ and $Ro$ are stored to be directly used later during the real-time computations.

4. Method according to claim 3, **characterized in that**, during the central controller design in which is performed a step of determining a faltering horizon $To$ and a command horizon $Tc$, such that $Tc < To$, with preferably $To/5 < Tc < To/2$, said step of determining the filtering horizon To and the command horizon Tc is performed under the constraint that whatever the frequency (ies) to be rejected, the delay margin is higher than a predetermined threshold delay margin $mrc$ and the modulus margin is higher than a predetermined threshold modulus margin $mmc$.

5. Method according to claim 4, **characterized in that**, in the step of determining the filtering horizon $To$ and the command horizon Tc under constraint, a set of minima of the delay margins and modulus margins is computed, wherein the minima are a function of the possible values of the frequency(ies) to be rejected and are also obtained by varying the values of $To$ and $Tc$, and that, based on the set of minima for the delay margins and modulus margins, the values $To$ and $Tc$ are computed back, which make sure that the constraint that the delay margin is higher than a predetermined threshold delay margin $mrc$ and the modulus margin is higher than a predetermined threshold modulus margin $mmc$ is met and moreover, preferably, that $To/5 < Tc < To/2$.

6. Method according to any one of the preceding claims, **characterized in that** the transfer function $Q(z^{-1})$ of the modifier block is computed considering the polynomial ratio

$$Q(z^{-1}) = \frac{\beta(z^{-1})}{\alpha(z^{-1})}$$

having varying parameters, and the whole control structure is liken, by equivalence, to a RST controller with R and S polynomial function, blocs

$$R(z^{-1}) = \alpha(z^{-1}) \cdot Ro(z^{-1}) + A(z^{-1}) \cdot \beta(z^{-1})$$

$$S(z^{-1}) = \alpha(z^{-1}).So(z^{-1}) - z^{-1} \cdot B(z^{-1}) \cdot \beta(z^{-1})$$

the polynomial function $S(z^{-1})$ is factorized as pre-specified into $S(z^{-1}) = Hs(Z^{-1}).S'(z^{-1})$ to bring out a term in $(1-(z^{-1}))$ corresponding to the static disturbance rejection and termes $S'(z^{-1})$ and $Hs1(z^{-1})$, wherein $S(z^{-1})$ is written $S(z^{-1}) = (1-z^{-1}).Hs1(z^{-1}).S'(z^{-1})$,

and **in that** the polynomials $Hs1$ and $\alpha$ are determined by discretization of a continuous transfer function depending on the desired rejection level $Mt$ at the considered frequency,

the polynomial $\beta$ being then obtained by solving the following Bezout equation

$$S'(z^{-1}) \cdot Hs(z^{-1}) + z^{-1}B(z^{-1}) \cdot \beta(z^{-1}) = So(z^{-1}) \cdot \alpha(z^{-1}).$$

7. Method according to claim 6, **characterized in that** the continuous transfer function depending on the desired rejection level at the considered frequency, in the case of only one frequency $f_1$, is:

$$F(s) = \frac{s^2 + 2\xi_{num} \cdot 2\pi \cdot f_1 \cdot s + (2\pi \cdot f_1)^2}{s^2 + 2\xi_{den} \cdot 2\pi \cdot f_1 \cdot s + (2\pi \cdot f_1)^2}.$$

8. Method according to claim 6, **characterized in that** the continuous transfer function depending on the desired rejection level at the considered frequency, in the case of two frequencies $f_1$ and $f_2$, is:

$$F(s) = \frac{s^2 + 2\xi_{num1} \cdot 2\pi \cdot f_1 \cdot s + (2\pi \cdot f_1)^2}{s^2 + 2\xi_{den1} \cdot 2\pi \cdot f_1 \cdot s + (2\pi \cdot f_1)^2} \cdot \frac{s^2 + 2\xi_{num2} \cdot 2\pi \cdot f_2 \cdot s + (2\pi \cdot f_2)^2}{s^2 + 2\xi_{den2} \cdot 2\pi \cdot f_2 \cdot s + (2\pi \cdot f_2)^2}.$$

9. Method according to claim 6, 7 or 8, **characterized in that** the rejection level $Mt$ for a given frequency $f_i$ is computed by $Mt_i = 20.\log(\xi num_i/\xi den_i)$ and preferably, the value taken for $\xi den_i$ is 0.1.

10. Device for robust rejection of the periodic disturbances in a motor-position control structure, the periodic disturbances being liken to at least one sinusoidal oscillation at a frequency proportional to the axis angular speed of said motor, the control structure receiving a position reference input signal $c(t)$ implementing a loop for controlling the position said motor axis, said control structure being of the RST controller type and being sampled so that numerical computations can be made in a programmable calculator to produce results intended to control the motor, the RST controller implementing computing means corresponding, on the one hand, to a function $1/So(z^{-1})$ upstream from the motor and producing a control signal $u(t)$ and, on the other hand, a function $Ro(z^{-1})$, in the loop thereof which receives as an input a position signal $\theta(t)$ from a position sensor on said motor axis, wherein the system including the motor, the position senior, the means for computing the functions $1/So(z^{-1})$ and $Ro(z^{-1})$, in a loop, is called central controller,

**characterized in that** it comprises, added to the central controller, means for implementing the method of any one of the preceding claims, said means being two additional computing means, the first one being an estimator block $E(z^{-1})$ and the second once a modifier block $Q(z^{-1})$, as well as an additional loop, the estimator block $E(z^{-1})$ allowing a load disturbance estimation signal $\hat{v}(t)$ to be computed, said estimator block receiving the control signal $u(t)$ as a first input and the position signal $\theta(t)$ as a second input, the modifier block $Q(z^{-1})$ receiving the load disturbance estimation signal $\hat{v}(t)$ as an input to produce a modification signal, which is applied to a negative input of an additional adder arranged upstream from the means for computing the function $1/So(z^{-1})$ and then forming the additional loop, the modifier block having a transfer function that varies as a function of the at least one determinable frequency and which is computed in real or quasi-real time under the constraint that the position sensitivity function $S_{\theta p}$ of the control structure comprises a notch for the at least one determinable frequency.

**Patentansprüche**

1. Verfahren zur robusten Unterdrückung der periodischen Störungen in einer Struktur zur Steuerung der Positionierung eines Motors, wobei die periodischen Störungen an mindestens eine Sinusschwingung mit einer bestimmbaren Frequenz angeglichen werden, die proportional zur Winkelgeschwindigkeit der Achse des Motors ist, wobei die Steuerungsstruktur ein Posit.ioni.erungssollsignal c(t) empfängt, das einen Regelkreis zur Positionierung der Achse des Motors verwendet, wobei die Steuerungsstruktur vom Typ RST-Regler ist und abgetastet wird, um numerische Berechnungen in einem Rechner zu ermöglichen, der programmierbar ist, um Ergebnisse zu gewinnen, die für die Steuerung des Motors bestimmt sind, wobei der RST-Regler Berechnungsmittel verwendet, die einerseits dem Motor vorgelagert einer Funktion $1/So(z^{-1})$ entsprechen und ein Steuersignal u(t) erzeugen, und andererseits in seinem Kreis, der am Eingang von einem Positionssensor auf der Achse des Motors ein Positionierungssignal $\theta(t)$ empfängt, einer Funktion $Ro(z^{-1})$ entsprechen, wobei die Baugruppe, die den Motor, den Positionssensor, die Mittel zur Berechnung der Funktionen $1/So(z^{-1})$ und $Ro(z^{-1})$ mit Rückführung zusammenfasst, Zentralregler genannt wird, **dadurch gekennzeichnet, dass**

- dem Zentralregler zwei zusätzliche Berechnungsmittel, wobei das erste ein Schätzblock $E(z^{-1})$ und das zweite ein Änderungsblock $Q(z^{-1})$ ist, sowie ein zusätzlicher Kreis hinzugefügt werden,
- der Motor in der Form eines modellierten Systems modelliert wird, das einer Laststörung v(t) unterworfen wird, wobei das modellierte System am Eingang das Steuersignal u(t) empfängt und am Ausgang das Positionierungssignal $\theta(t)$ erzeugt, wobei das Modell des Systems eine Funktion $z^{-1}B(z^{-1})$ auf das Steuersignal u(t) anwendet, um ein Signal zu erzeugen, das zur Laststörung v(t) addiert wird, wobei die Resultante einer Funktion $1/A(z^{-1})$ unterwarfen wird, um das Positionierungssignal $\theta(t)$ zu erzeugen,
- im Schätzblock $E(z^{-1})$, der als ersten Eingang das Steuersignal u(t) und als zweiten Eingang das Positionierungssignal $\theta(t)$ empfängt, ein Schätzsignal der Laststörung $\hat{v}(t)$ berechnet wird, wobei das Steuersignal u(t) im Schätzblock der Funktion $z^{-1}B(z^{-1})$ unterworfen wird, um ein Signal zu erzeugen, das vom Ergebnis der Anwendung der Funktion $A(z^{-1})$ auf das Positionierungssignal $\theta(t)$ subtrahiert wird, wobei die Subtraktion das Schätzsignal der Laststörung $\hat{v}(t)$ ergibt,
- das Schätzsignal der Laststörung $\hat{v}(t)$ an den Änderungsblock $Q(z^{-1})$ angewandt wird, um ein Änderungssignal zu erzeugen, das auf einen negativen Eingang eines zusätzlichen Addierers angewandt wird, der dem Mittel zur Berechnung der Funktion $1/So(z^{-1})$ vorgelagert angeordnet ist und somit den zusätzlichen Kreis bildet, wobei der Änderungsblock eine variable Übertragungsfunktion in Abhängigkeit von der mindestens einen bestimmbaren Frequenz aufweist und die, unter der Beschränkung, dass die Empfindlichkeitsfunktion der Positionierung $S_{\theta p}$ der Steuerungsstruktur für die mindestens eine bestimmbare Frequenz ein Wellental umfasst, in Echtzeit oder Quasi-Echtzeit berechnet wird.

2. Verfahren nach Anspruch 1, **dadurch gekennzeichnet, dass** der zusätzliche Kreis sich innerhalb des Kreises in $Ro(z^{-1})$ des Zentralreglers befindet, wobei der zusätzliche Addierer dem Mittel zur Berechnung der Funktion $1/So(z^{-1})$ unmittelbar vorgelagert angeordnet ist.

3. Verfahren nach Anspruch 1 oder 2, **dadurch gekennzeichnet, dass** der Zentralregler vorab, außer Betrieb, berechnet wird, um statische Störungen zu unterdrücken, und die Funktionen So und Ro gespeichert werden, um später direkt bei den Berechnungen in Echtzeit verwendet zu werden.

4. Verfahren nach Anspruch 3, **dadurch gekennzeichnet, dass** bei der Berechnung des Zentralreglers, in der ein Schritt der Bestimmung eines Filterungshorizonts To und eines Steuerungshorizonts Tc, wie Tc < To, wobei vorzugsweise To/5<Tc<To/2, verwendet wird, wobei der Schritt der Bestimmung des Filterungshorizonts To und des Steuerungshorizonts Tc unter der Beschränkung durchgeführt wird, dass der Verzögerungsbereich unabhängig von der/den zu unterdrückenden Frequenz/en größer ist als ein vorbestimmter Schwellenverzögerungsbereich mrc und der Betragsbereich größer ist als ein vorbestimmter Schwellenbetragsbereich mmc.

5. Verfahren nach Anspruch 4, **dadurch gekennzeichnet, dass** beim Schritt der Bestimmung des Filterungshorizonts To und des Steuerungshorizonts Tc unter Belastung eine Menge von Mindestwerten der Verzögerungsbereiche und der Betragsbereiche berechnet wird, wobei die Mindestwerte abhängig von den möglichen Werten der zu unterdrückenden Frequenz/en sind und auch erhalten werden, indem die Werte von To und Tc variiert werden, und **dadurch**, dass ausgehend von der Menge von Mindestwerten der Verzögerungsbereiche und der Betragsbereich zu den Werten To und Tc aufgestiegen wird, die die Einhaltung der Beschränkung gewährleisten, dass der Verzögerungsbereich größer ist als ein vorbestimmter Schwellenverzögerungsbereich mrc und der Betragsbereich größer ist als ein vorbestimmter Schwellenbetragsbereich mmc und dass zudem vorzugsweise To/5<Tc<To/2.

6. Verfahren nach einem der vorhergehenden Ansprüche, **dadurch gekennzeichnet, dass** die Übertragungsfunktion $Q(z^{-1})$ des Änderungsblocks unter Berücksichtigung des Verhältnisses von Polynomen

$$Q(z^{-1}) = \frac{\beta(z^{-1})}{\alpha(z^{-1})}$$

mit variablen Parametern berechnet wird und die gesamte Steuerungsstruktur durch Äquivalenz von Polynomfunktionsblöcken an R und S

$$R(z^{-1}) = \alpha(z^{-1}) \cdot Ro(z^{-1}) + A(z^{-1}) \cdot \beta(z^{-1})$$

$$S(z^{-1}) = \alpha(z^{-1}) \cdot So(z^{-1}) - z^{-1} \cdot B(z^{-1}) \cdot \beta(z^{-1})$$

an einen RST-Regler angeglichen wird, die Polynomfunktion $S(z^{-1})$, wie in **$S(z^{-1}) = Hs(z^{-1}) \cdot S'(z^{-1})$** vorgegeben, in Faktoren verlegt wird, um einen Term in $(1-z^{-1})$ der der Unterdrückung der statischen Störungen entspricht, und Terme **$S'(z^{-1})$ und $Hs1(z^{-1})$, $S(z^{-1})$** zu erhalten, die wie folgt ausgedrückt werden:

$$S(z^{-1}) = (1-z^{-1}) \cdot Hs1(z^{-1}) \cdot S'(z^{-1})$$

und **dadurch**, dass die Polynome Hs1 und $\alpha$ durch Diskretisierung einer stetigen Übertragungsfunktion bestimmt werden, die vom gewünschten Unterdrückungspegel Mt bei der betrachteten Frequenz abhängt,
wobei das Polynom $\beta$ danach durch Auslösen der folgenden Formel von Bézout erhalten wird:

$$S'(z^{-1}) \cdot Hs(z^{-1}) + z^{-1} B(z^{-1}) \cdot \beta(z^{-1}) = So(z^{-1}) \cdot \alpha(z^{-1})$$

7. Verfahren nach Anspruch 6, **dadurch gekennzeichnet, dass** die stete Übertragungsfunktion, die vom bei der betrachteten Frequenz gewünschten Unterdrückungspegel abhängt, im Fall einer einzigen Frequenz f1 die folgende ist:

$$F(s) = \frac{s^2 + 2\xi_{num} \cdot 2\pi \cdot f_1 \cdot s + (2\pi \cdot f_1)^2}{s^2 + 2\xi_{den} \cdot 2\pi \cdot f_1 \cdot s + (2\pi \cdot f_1)^2}$$

8. Verfahren nach Anspruch 6, **dadurch gekennzeichnet, dass** die stetige Übertragungsfunktion, die vom bei der betrachteten Frequenz gewünschten Unterdrückungspegel abhängt, im Fall von zwei Frequenzen f1 und f2 die folgende ist:

$$F(s) = \frac{s^2 + 2\xi_{num1} \cdot 2\pi \cdot f_1 \cdot s + (2\pi \cdot f_1)^2}{s^2 + 2\xi_{den1} \cdot 2\pi \cdot f_1 \cdot s + (2\pi \cdot f_1)^2} \cdot \frac{s^2 + 2\xi_{num2} \cdot 2\pi \cdot f_2 \cdot s + (2\pi \cdot f_2)^2}{s^2 + 2\xi_{den2} \cdot 2\pi \cdot f_2 \cdot s + (2\pi \cdot f_2)^2}$$

9. Verfahren nach Anspruch 6, 7 oder 8, **dadurch gekennzeichnet, dass** der Unterdrückungspegel Mt für eine gegebene Frequenz $f_i$ durch $Mt_i = 20.\log(\xi num_i/\xi den_i)$ berechnet wird und vorzugsweise $\xi den_i = 0{,}1$ genommen wird.

**10.** Vorrichtung zur robusten Unterdrückung der periodischen Störungen in einer Struktur zur Steuerung der Positionierung eines motor, wobei die periodischen Störungen an mindestens eine Sinusschwingung mit einer bestimmbaren Frequenz angeglichen werden, die proportional zur Winkelgeschwindigkeit der Achse des Motors ist, wobei die Steuerungsstruktur ein Positionierungssollsignal c(t) empfängt, das einen Regelkreis zur Positionierung der Achse des Motors verwendet, wobei die Steuerungsstruktur vom Typ RST-Regler ist und abgetastet wird, um numerische Berechnungen in einem Rechner zu ermöglichen, der programmierbar ist, um Ergebnisse zu gewinnen, die für die Steuerung des Motors bestimmt sind, wobei der RST-Regler Berechnungsmittel verwendet, die einerseits dem Motor vorgelagert einer Funktion $1/So\ (z^{-1})$ entsprechen und ein Steuersignal u(t) erzeugen, und andererseits in seinem Kreis, der am Eingang von einem Positionssensor auf der Achse des Motors ein Positionierungssignal $\theta$(t) empfängt, einer Funktion $Ro(z^{-1})$ entsprechen, wobei die Baugruppe, die den Motor, den Positionssensor, die Mittel zur Berechnung der Funktionen $1/So(z^{-1})$ und $Ro(z^{-1})$ mit Rückführung zusammenfasst, Zentralregler genannt wird,

**dadurch gekennzeichnet, dass** sie zusätzlich zum Zentralregler Mittel zum Ausführen des Verfahrens nach einem der vorhergehenden Ansprüche, wobei die Mittel zwei zusätzliche Berechnungsmittel sind, wobei das erste ein Schätzblock $E(z^{-1})$ und das zweite ein Anderungsblock $Q(z^{-1})$ ist, sowie einen zusätzlichen Kreis umfasst, wobei der Schätzblock $E(z^{-1})$ die Berechnung eines Schätzsignals der Laststörung $\hat{v}(t)$ ermöglicht, wobei der Schätzblock als ersten Eingang das Steuersignal u(t) und als zweiten Eingang das Positionierungssignal $\theta$(t) empfängt, wobei der Änderungsblock $Q(z^{-1})$ als Eingang das Schätzsignal der Laststörung $\hat{v}(t)$ empfängt, um ein Änderungssignal zu erzeugen, das auf einen negativen Eingang eines zusätzlichen Addierers angewandt wird, der dem Mittel zur Berechnung der Funktion $1/So(z^{-1})$ vorgelagert angeordnet ist und somit den zusätzlichen Kreis bildet, wobei der Änderungsblock eine Übertragungsfunktion aufweist, die in Abhängigkeit von der mindestens einen bestimmbaren Frequenz variabel ist und unter der Beschränkung, dass die Empfindlichkeitsfunktion der Positionierung $S_{\theta p}$ der Steuerungsstruktur für die mindestens eine bestimmbare Frequenz ein Wellental umfasst, in Echtzeit oder Quasi-Echtzeit berechnet wird.

Fig. 1

Fig. 2

Fig. 3

Fig. 4

Fig. 5

Fig. 6

Fig. 7

Fig. 8A

niveau de
rejet désiré pour
la perturbation
sinusoïdale

$|S_{\theta v}|$

f_low    f_up    Fréquence

$\dfrac{\xi_{num}}{\xi_{den}}$

1

f_low    f_up    Fréquence

Fig. 8B

Pôle de filtrage

Zéro de
A(1/z).Hs(1/z)

Cercle rayon
Exp(-Te/To)

Cercle rayon unité
(limite de stabilité)

Fig. 9

Vitesse de
consigne

| Calcul de f1 et f2 | f1 → | Calcul de $\xi_{num1}$ $\xi_{num2}$ | → | Calcul de Hs(1/z) et α(1/z) |
|---|---|---|---|---|

f2

Hs(1/z)

α(1/z)

Résolution de l'équation de Bézout :
S'(1/z).Hs(1/z)+(1/z)*B(1/z)*β(1/z)=So(1/z).α(1/z)

β(1/z)

α(1/z)

Fig. 10

Fig. 11

$$f1(0)$$

*L'initialisation de f1 est faite en fonction de* $T_o$, $\psi_1$ *et* $\psi_2$

$i=i+1$

$$MR'(f1(i)) = \frac{MR(f1(i) + \Delta f1) - MR(f1(i) - \Delta f1)}{2.\Delta f1}$$

$$f1(i+1) = f1(i) - \eta.MR'$$

*non*

$$\left| f1(i+1) - f1(i) \right| < \varepsilon \quad ?$$

*oui*

*fin : on dispose de la valeur de min (MR(To, Tc))*

**Fig.12**

f1(0)

*L'initialisation de f1 est faite en fonction de* To, $\psi_1$ *et* $\psi_2$

*i=i+1*

$$MM'(f1(i)) = \frac{MM(f1(i) + \Delta f1) - MM(f1(i) - \Delta f1)}{2.\Delta f1}$$

$$f1(i+1) = f1(i) - \eta \cdot MM'$$

*non*     $\left| f1(i+1) - f1(i) \right| < \varepsilon$    ?

*oui*

*fin : on dispose de la valeur de min (MM(To,Tc))*

Fig. 13

$i=i+1$

To(0), Tc(0)

$mr=Marge\_retard\_min(To(i),Tc(i))$
$mm=Marge\_module\_min(To(i),Tc(i))$
$mrpTo=Marge\_retard\_min(To(i)+\Delta To(i),Tc(i))$
$mmpTo=Marge\_module\_min(To(i)+\Delta To(i),Tc(i))$
$mrpTc=Marge\_retard\_min(To(i),Tc(i)+\Delta Tc)$
$mmpTc=Marge\_module\_min(To(i),Tc(i)+\Delta Tc)$

$$G = \begin{bmatrix} \dfrac{mrpTo-mr}{\Delta To} & \dfrac{mrpTc-mr}{\Delta Tc} \\ \dfrac{mmpTo-mm}{\Delta To} & \dfrac{mmpTc-mm}{\Delta Tc} \end{bmatrix}$$

$$\begin{pmatrix} To(i+1) \\ Tc(i+1) \end{pmatrix} = \begin{pmatrix} To(i) \\ Tc(i) \end{pmatrix} + G^{-1} \begin{pmatrix} mrc-mr \\ mmc-mm \end{pmatrix}$$

Projection de To et Tc tel que
$2.Tc<To<5.Tc$

$|To(i+1)-To(i)|<\varepsilon_1$ ?
ET
$|Tc(i+1)-Tc(i)|<\varepsilon_2$ ?

non

oui

fin : on dispose de To et Tc

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2911699 A

**Littérature non-brevet citée dans la description**

- *IEEE/ASME Transactions on mechatronics,* Juillet 2004, vol. 9 (2

- **Ioan Doré Landau.** Commande des systèmes. 2002